# EUROPEAN PATENT SPECIFICATION

(11) **EP 4 277 171 B1**
(45) Date of publication and mention of the grant of the patent: **04.11.2026**
(21) Application number: 22756397.0
(22) Date of filing: 25.01.2022
(51) Int. Cl.: H04J 11/00, H04L 5/00, H04W 72/04, H04W 76/15, H04B 7/06

(54) **ELECTRONIC DEVICE FOR REDUCING INTERFERENCE FROM REFERENCE SIGNAL, AND OPERATION METHOD THEREOF**
ELEKTRONISCHE VORRICHTUNG ZUR VERRINGERUNG DER INTERFERENZ AUS REFERENZSIGNALEN UND BETRIEBSVERFAHREN DAFÜR
DISPOSITIF ÉLECTRONIQUE PERMETTANT DE RÉDUIRE UNE INTERFÉRENCE PROVENANT D'UN SIGNAL DE RÉFÉRENCE ET PROCÉDÉ DE FONCTIONNEMENT DUDIT DISPOSITIF

(30) Priority: 16.02.2021 KR 20210020267
(43) Date of publication of application: 15.11.2023
(73) Proprietor: Samsung Electronics Co., Ltd., Suwon-si, Gyeonggi-do 16677 (KR)
(72) Inventor: JANG, Kyujae, Suwon-si Gyeonggi-do 16677 (KR); BYUN, Youngsik, Suwon-si Gyeonggi-do 16677 (KR); YUN, Yeonsang, Suwon-si Gyeonggi-do 16677 (KR); LIM, Yeongseob, Suwon-si Gyeonggi-do 16677 (KR); JEON, Minhwan, Suwon-si Gyeonggi-do 16677 (KR); CHO, Sungyoul, Suwon-si Gyeonggi-do 16677 (KR)
(74) Representative: Nederlandsch Octrooibureau
(86) International application number: PCT/KR2022/001306
(87) International publication number: WO 2022/177193

(56) References cited:
- EP-A1- 3 998 713
- WO-A1-2021/004350
- CN-A- 110 858 976
- KR-A- 20120 003 114
- KR-A- 20150 080 523
- KR-B1- 100 495 962
- KR-B1- 101 792 626
- US-A1- 2019 166 514

## Description

### [Technical Field]

Various embodiments of the disclosure relate to an apparatus and a method for reducing interference by a reference signal in an electronic device.

### [Background Art]

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. The 5G communication system is considered to be implemented in 60GHz or lower bands (e.g., about 1.8GHz bands or about 3.5GHz bands) or 60GHz or higher bands (e.g., about 28GHz bands or about 39GHz bands) so as to accomplish higher data rates. To decrease propagation loss of the radio waves and increase the transmission distance of the radio waves, beamforming, massive multiple-input multiple-output (massive MIMO), full dimensional MIMO (FD-MIMO), array antenna, analog beam forming, large scale antenna techniques are discussed in 5G communication systems.

### [Disclosure]

### [Technical Problem]

An electronic device may support dual connectivity (DC) for transmitting and/or receiving data through two nodes (for example, a base station or a transmission node). For example, the electronic device may access a first node through a first network (for example, long-term evolution (LTE)) and access a second node through a second network (for example, new radio (NR) network).

The electronic device may communicate with the second node through the second network while communicating with the first node through the first network. In this case, the electronic device may have interference by a reference signal (for example, a sound reference signal (SRS)) of the second network and thus deteriorate the communication performance with the first network.

Various embodiments of the disclosure disclose an apparatus and a method for reducing interference by the reference signal of the second network in the electronic device supporting dual connectivity of the first network and the second network. WO 2021/004350 A1 discloses a dual connectivity system, with multiple antennas and the corresponding Tx/Rx modules. The set of antennas used for SRS transmission in one network excludes an antenna which is used for the other network. CN 110 858 976 A discloses a method/system where zero power is applied to primary card SRS transmissions for an antenna which his used by the secondary card for DRX listening.

### [Technical Solution]

An electronic device is defined according to independent claim 1.

A method of operating an electronic device is defined according to independent claim 7.

### [Advantageous Effects]

According to various embodiments of the disclosure, it is possible to reduce, when interference by a reference signal (for example, a sounding reference signal (SRS)) of a network (for example, a new radio (NR) network) is detected in an electronic device, the effect of interference by the reference signal of the network by controlling transmission of the reference signal of the network.

### [Description of Drawings]

FIG. 1 is a block diagram illustrating an electronic device within a network environment according to various embodiments.
FIG. 2 is a block diagram of an electronic device for supporting legacy network communication and 5G network communication according to various embodiments.
FIG. 3 illustrates the structure of a protocol stack of a network 100 of 4G communication and/or 5G communication according to various embodiments.
FIG. 4 illustrates wireless communication systems that provide 4G communication and/or 5G communication networks according to various embodiments.
FIG. 5 is a block diagram of an electronic device supporting dual connectivity according to various embodiments.
FIG. 6 is a block diagram of an electronic device for controlling transmission of a reference signal according to various embodiments.
FIG. 7 is a flowchart illustrating a process in which the electronic device controls transmission of a reference signal according to various embodiments.
FIG. 8 is a flowchart illustrating a process in which the electronic device detects an error by a reference signal of a second network according to various embodiments.
FIG. 9 is a flowchart illustrating a process in which the electronic device adjusts a path for transmitting the reference signal according to various embodiments.
FIG. 10 is a flowchart illustrating a process in which the electronic device adjusts a power amplification level for transmitting the reference signal according to various embodiments.
FIG. 11 is a flowchart illustrating a process in which the electronic device determines whether to transmit the reference signal according to various embodiments.
FIG. 12 is a flowchart illustrating a process in which the electronic device adjusts a transmission period of the reference signal according to various embodiments.
FIG. 13A illustrates an example of a transmission period of the reference signal of the electronic device according to various embodiments.
FIG. 13B illustrates an example of adjusting the transmission period of the reference signal by the electronic device according to various embodiments.
FIG. 13C illustrates another example of adjusting the transmission period of the reference signal by the electronic device according to various embodiments.
FIG. 14 is a flowchart illustrating a process in which the electronic device applies an avoidance algorithm of the reference signal according to various embodiments.

### [Mode for Invention]

Hereinafter, various embodiments are described in detail with reference to the accompanying drawings.

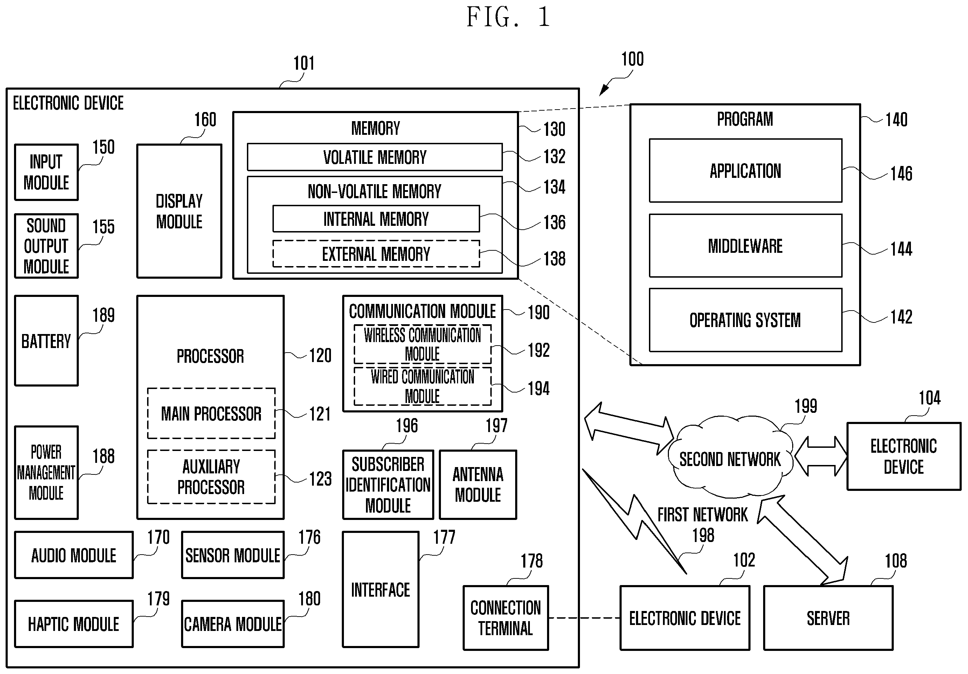

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to various embodiments, the subscriber identification module 196 may include a plurality of subscriber identification modules. For example, a plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

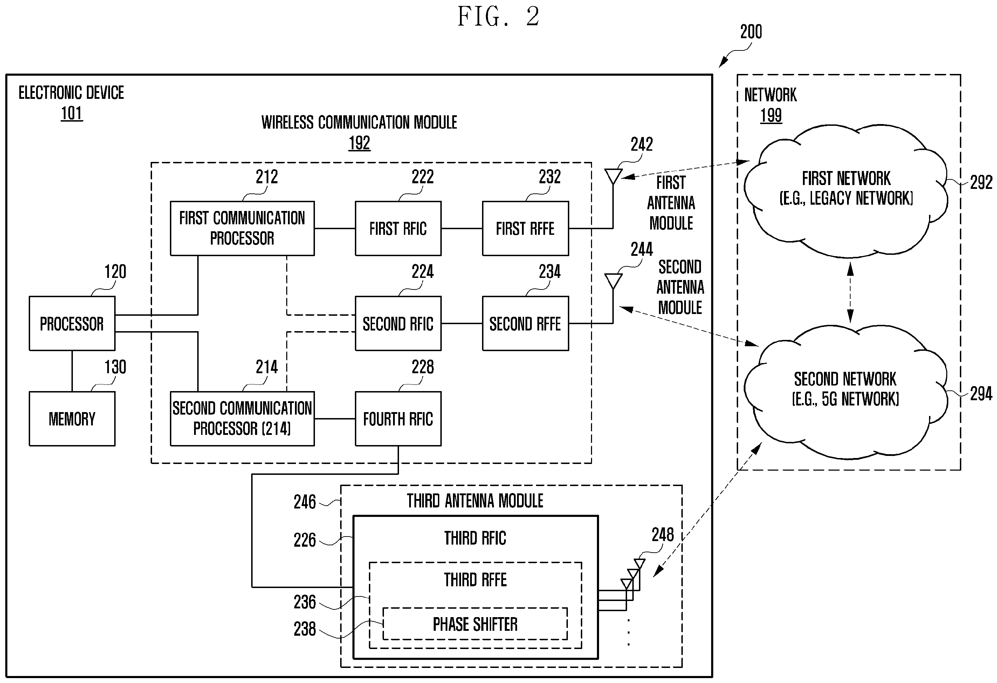

FIG. 2 is a block diagram 200 of the electronic device 101 for supporting legacy network communication and 5G network communication according to various embodiments.

Referring to FIG. 2, according to various embodiments, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may include the processor 120 and the memory 130. The network 199 may include a first network 292 and a second network 294. According to another embodiment, the electronic device 101 may further include at least one component among the components illustrated in FIG. 1, and the network 199 may further include at least one other network. According to an embodiment, the first communication processor 212, the second communication processor 214, the first RFIC 222, the second RFIC 224, the fourth RFIC 228, the first RFFE 232, and the second RFFE 234 may be at least a part of the wireless communication module 192. According to another embodiment, the fourth RFIC 228 may be omitted, or may be included as a part of the third RFIC 226.

The first communication processor 212 may establish a communication channel of a band to be used for wireless communication with the first network 292, and may support legacy network communication via the established communication channel. According to an embodiment, the first network may be a legacy network including second generation (2G), third generation (3G), fourth generation (4G), or long-term evolution (LTE) network. The second communication processor 214 may establish a communication channel corresponding to a designated band (e.g., approximately 6 GHz to 60 GHz) among bands to be used for wireless communication with the second network 294, and may support 5G network communication via the established communication channel. According to an embodiment, the second network 294 may be a 5G network (e.g., new radio (NR)) defined in 3GPP. In addition, according to an embodiment, the first communication processor 212 or the second communication processor 214 may establish a communication channel corresponding to another designated band (e.g., approximately 6 GHz or less) among bands to be used for wireless communication with the second network 294, and may support 5G network communication via the established communication channel. According to an embodiment, the first communication processor 212 and the second communication processor 214 may be implemented in a single chip or a single package. According to an embodiment, the first communication processor 212 or the second communication processor 214 may be implemented in a single chip or a single package, together with the processor 120, the auxiliary processor 123, or the communication module 190.

According to an embodiment, the first communication processor 212 may perform data transmission or reception with the second communication processor 214. For example, data which has been classified to be transmitted via the second network 294 may be changed to be transmitted via the first network 292.

In this instance, the first communication processor 212 may receive transmission data from the second communication processor 214. For example, the first communication processor 212 may perform data transmission or reception with the second communication processor 214 via an inter-processor interface. The inter-processor interface may be implemented as, for example, a universal asynchronous receiver/transmitter (UART) (e.g., a high speed-UART (HS-UART)) or a peripheral component interconnect bus express (PCIe), but the type of interface is not limited thereto. For example, the first communication processor 212 and the second communication processor 214 may exchange control information and packet data information using, for example, a shared memory. For example, the first communication processor 212 may perform transmission or reception of various types of information such as sensing information, information associated with an output strength, and resource block (RB) allocation information, with the second communication processor 214.

Depending on implementation, the first communication processor 212 may not be directly connected to the second communication processor 214. In this instance, the first communication processor 212 may perform data transmission or reception with the second communication processor 214, via the processor 120 (e.g., an application processor). For example, the first communication processor 212 and the second communication processor 214 may perform data transmission or reception via the processor 120 (e.g., an application processor) and a HS-UART interface or a PCIe interface, but the type of interface is not limited. For example, the first communication processor 212 and the second communication processor 214 may exchange control information and packet data information using the processor 120 (e.g., an application processor) and a shared memory. According to an embodiment, the first communication processor 212 and the second communication processor 214 may be implemented in a single chip or a single package. According to various embodiments, the first communication processor 212 or the second communication processor 214 may be implemented in a single chip or a single package, together with the processor 120, the auxiliary processor 123, or the communication module 190.

In the case of transmission, the first RFIC 222 may convert a baseband signal generated by the first communication processor 212 into a radio frequency (RF) signal in the range of approximately 700 MHz to 3 GHz, which is used in the first network 292 (e.g., a legacy network). In the case of reception, an RF signal is obtained from the first network 292 (e.g., a legacy network) via an antenna (e.g., the first antenna module 242), and may be preprocessed via an RFFE (e.g., the first RFFE 232). The first RFIC 222 may convert the preprocessed RF signal into a baseband signal so that the baseband signal is processed by the first communication processor 212.

In the case of transmission, the second RFIC 224 may convert a baseband signal generated by the first communication processor 212 or the second communication processor 214 into an RF signal (hereinafter, a 5G Sub6 RF signal) in an Sub6 band (e.g., approximately 6 GHz or less) used in the second network 294 (e.g., a 5G network). In the case of reception, a 5G Sub6 RF signal may be obtained from the second network 294 (e.g., a 5G network) via an antenna (e.g., the second antenna module 244), and may be preprocessed by an RFFE (e.g., the second RFFE 234). The second RFIC 224 may convert the preprocessed 5G Sub6 RF signal into a baseband signal so that the signal may be processed by a corresponding communication processor among the first communication processor 212 or the second communication processor 214.

The third RFIC 226 may convert a baseband signal generated by the second communication processor 214 into an RF signal (hereinafter, a 5G Above6 RF signal) of a 5G Above6 band (e.g., approximately 6 GHz to 60 GHz) to be used in the second network 294 (e.g., a 5G network). In the case of reception, a 5G Above6 RF signal is obtained from the second network 294 (e.g., a 5G network) via an antenna (e.g., the antenna 248), and may be preprocessed by the third RFFE 236. The third RFIC 226 may convert the preprocessed 5G Above6 RF signal into a baseband signal so that the signal is processed by the second communication processor 214. According to an embodiment, the third RFFE 236 may be implemented as a part of the third RFIC 226.

According to an embodiment, the electronic device 101 may include the fourth RFIC 228, separately from or, as a part of, the third RFIC 226. In this instance, the fourth RFIC 228 may convert a baseband signal produced by the second communication processor 214 into an RF signal (hereinafter, an IF signal) in an intermediate frequency band (e.g., approximately 9 GHz to 11 GHz), and may transfer the IF signal to the third RFIC 226. The third RFIC 226 may convert the IF signal into a 5G Above6 RF signal. In the case of reception, a 5G Above6 RF signal may be received from the second network 294 (e.g., a 5G network) via an antenna (e.g., the antenna 248), and may be converted into an IF signal by the third RFIC 226. The fourth RFIC 228 may convert the IF signal into a baseband signal so that the second communication processor 214 is capable of processing the baseband signal.

According to an embodiment, the first RFIC 222 and the second RFIC 224 may be implemented as at least a part of a single chip or a single package. According to an embodiment, the first RFFE 232 and the second RFFE 234 may be implemented as at least a part of a single chip or single package. According to an embodiment, at least one of the first antenna module 242 or the second antenna module 244 may be omitted or may be combined with another antenna module, so as to process RF signals of a plurality of corresponding bands.

According to an embodiment, the third RFIC 226 and the antenna 248 may be disposed in the same substrate, and may form a third antenna module 246. For example, the wireless communication module 192 or the processor 120 may be disposed in a first substrate (e.g., a main PCB). In this instance, the third RFIC 226 is disposed in a part (e.g., a lower part) of a second substrate (e.g., a sub PCB) different from the first substrate, and the antenna 248 is disposed in another part (e.g., an upper part), so that the third antenna module 246 may be formed. By disposing the third RFIC 226 and the antenna 248 in the same substrate, the length of a transmission line therebetween may be reduced. For example, this may reduce a loss (e.g., a diminution) of a high-frequency band signal (e.g., approximately 6 GHz to 60 GHz) used for 5G network communication, the loss being caused by a transmission line. Accordingly, the electronic device 101 may improve the quality or speed of communication with the second network 294 (e.g., a 5G network).

According to an embodiment, the antenna 248 may be implemented as an antenna array including a plurality of antenna elements which may be used for beamforming. In this instance, the third RFIC 226, for example, may include a plurality of phase shifters 238 corresponding to a plurality of antenna elements, as a part of the third RFFE 236. In the case of transmission, each of the plurality of phase shifters 238 may shift the phase of a 5G Above6RF signal to be transmitted to the outside of the electronic device 101 (e.g., a base station of a 5G network) via a corresponding antenna element. In the case of reception, each of the plurality of phase shifters 238 may shift the phase of a 5G Above6 RF signal received from the outside via a corresponding antenna element into the same or substantially the same phase. This may enable transmission or reception via beamforming between the electronic device 101 and the outside.

The second network 294 (e.g., a 5G network) may operate independently (e.g., Standalone (SA)) from the first network 292 (e.g., a legacy network), or may operate by being connected thereto (e.g., Non-Standalone (NSA)). For example, in the 5G network, only an access network (e.g., 5G radio access network (RAN) or next generation RAN (NG RAN)) may exist, and a core network (e.g., next generation core (NGC)) may not exist. In this instance, the electronic device 101 may access the access network of the 5G network, and may access an external network (e.g., the Internet) under the control of the core network (e.g., an evolved packed core (EPC)) of the legacy network. Protocol information (e.g., LTE protocol information) for communication with the legacy network or protocol information (e.g., new radio (NR) protocol information) for communication with the 5G network may be stored in the memory 130, and may be accessed by another component (e.g., the processor 120, the first communication processor 212, or the second communication processor 214).

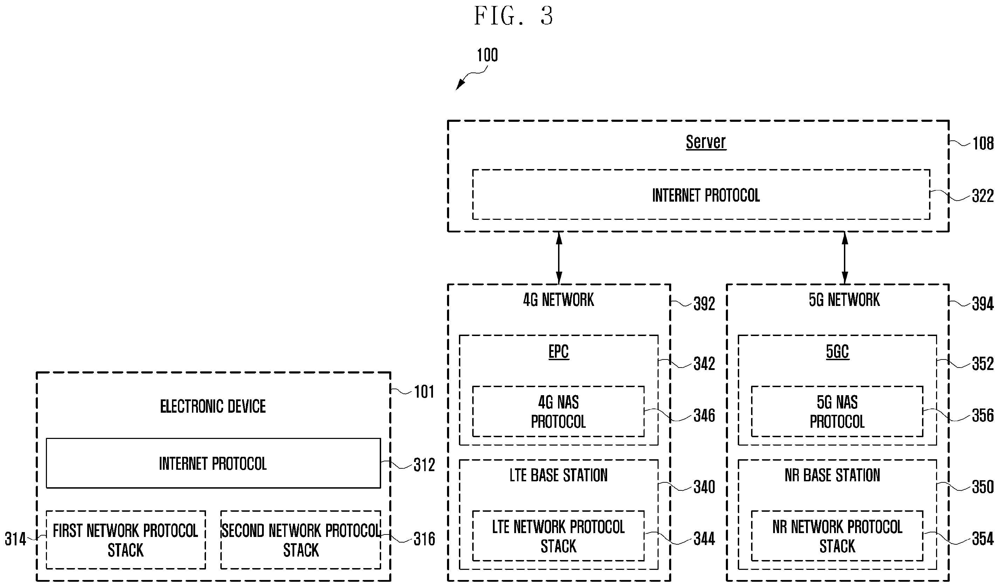

FIG. 3 is a diagram illustrating the protocol stack structure of a network 100 of 4G communication and/or 5G communication according to various embodiments.

Referring to FIG. 3, the network 100 according to various embodiments may include the electronic device 101, a 4G network 392, a 5G network 394, and the server 108.

According to various embodiments, the electronic device 101 may include an Internet protocol 312, a first communication protocol stack 314, and a second communication protocol stack 316. For example, the electronic device 101 may communicate with the server 108 via the 4G network 392 and/or 5G network 394.

According to an embodiment, the electronic device 101 may perform Internet communication associated with the server 108 using the Internet protocol 312 (e.g., a transmission control protocol (TCP), a user datagram protocol (UDP), or an internet protocol (IP)). For example, the Internet protocol 312 may be performed in a main processor (e.g., the main processor 121 of FIG. 1) included in the electronic device 101.

According to another embodiment, the electronic device 101 may perform wireless communication with the 4G network 392 using the first communication protocol stack 314. According to another embodiment, the electronic device 101 may perform wireless communication with the 5G network 394 using the second communication protocol stack 316. For example, the first communication protocol stack 314 and the second communication protocol stack 316 may be performed by one or more communication processors (e.g., the wireless communication module 192 of FIG. 1) included in the electronic device 101.

According to various embodiments, the server 108 may include the Internet protocol 322. The server 108 may perform transmission or reception of data related to the Internet protocol 322 with the electronic device 101 via the 4G network 392 and/or 5G network 394. According to an embodiment, the server 108 may include a cloud computing server existing outside the 4G network 392 or the 5G network 394. According to another embodiment, the server 108 may include an edge computing server (or a mobile edge computing (MEC) server) located inside at least one of the 4G network 392 or the 5G network 394.

According to various embodiments, the 4G network 392 may include a long-term evolution (LTE) base station 340 and an evolved packet core (EPC) 342. The LTE base station 340 may include an LTE communication protocol stack 344. The EPC 342 may include a legacy non-access stratum (NAS) protocol 346. The 4G network 392 may perform LTE wireless communication with the electronic device 101 using the LTE communication protocol stack 344 and the legacy NAS protocol 346.

According to various embodiment, the 5G network 394 may include a new radio (NR) base station 350 and a 5th generation core (5GC) 352. The NR base station 350 may include an NR communication protocol stack 354. The 5GC 352 may include a 5G NAS protocol 356. The 5G network 394 may perform NR wireless communication with the electronic device 101 using the NR communication protocol stack 354 and the 5G NAS protocol 356.

According to an embodiment, the first communication protocol stack 314, the second communication protocol stack 316, the LTE communication protocol stack 344, and the NR communication protocol stack 354 may include a control plane protocol for transmitting or receiving a control message and a user plane protocol for transmitting or receiving user data. For example, the control message may include a message related to at least one of security control, bearer setup, authentication, registration, or mobility management. For example, the user data may include, for example, the remaining data, excluding the control message.

According to an embodiment, the control plane protocol and the user plane protocol may include a physical (PHY) layer, a medium access control (MAC) layer, a radio link control (RLC) layer, or a packet data convergence protocol (PDCP) layer. For example, the PHY layer may perform channel coding and modulation of data received from a higher layer (e.g., the MAC layer), and transmit the same to a wireless channel, and may perform demodulation and decoding of data received via a wireless channel and transmit the same to a higher layer. The PHY layer included in the second communication protocol stack 316 and the NR communication protocol stack 354 may further perform an operation related to beamforming. For example, the MAC layer may logically/physically map data to a wireless channel to be transmitted or received, and may perform hybrid automatic repeat request (HARQ) for error correction. For example, the RLC layer may perform concatenation, segmentation, or reassembly of data, may identify the order of data, may perform reordering, and may perform redundancy check. For example, the PDCP layer may perform an operation of ciphering control data and user data, and an operation related to data integrity. The second communication protocol stack 316 and the NR communication protocol stack 354 may further include a service data adaptation protocol (SDAP). For example, the SDAP may manage wireless bearer allocation based on the quality of service (QoS) of user data.

According to various embodiments, the control plane protocol may include a radio resource control (RRC) layer and a non-access stratum (NAS) layer. For example, the RRC layer may process control data related to radio bearer setup, paging, or mobility management. For example, the NAS may process a control message related to authentication, registration, and mobility management.

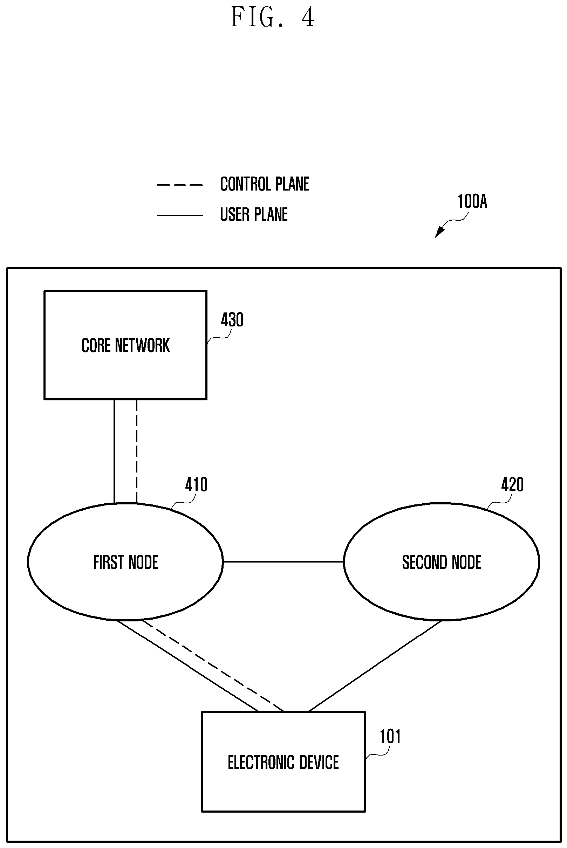

FIG. 4 illustrates wireless communication systems that provide 4G communication and/or 5G communication networks according to various embodiments.

Referring to FIG. 4, a network environment 100A may include at least one of a 4G network or a 5G network. For example, the 4G network may include an LTE base station (for example, an eNodeB (eNB)) of the 3GPP standard that supports radio access with the electronic device 101 and an evolved packet core (EPC) that manages 4G communication. For example, the 5G network may include a new radio (NR) base station (for example, a gNodeB (gNB)) that supports radio access with the electronic device 101 and a 5^{th} generation core (5GC) that manages 5G communication of the electronic device 101.

According to various embodiments, the electronic device 101 may transmit and/or receive a control message and user data through 4G communication and/or 5G communication. For example, the control message may include, for example, a message related to at least one of security control of the electronic device 101, bearer setup, authentication, registration, or mobility management. For example, the user data may include user data except for the control message transmitted and/or received between the electronic device 101 and a core network 430 (for example, the EPC and/or the 5GC).

According to various embodiments, the electronic device 101 may transmit and receive at least one of the control message or the user data related to the second network (for example, 5G network or the 4G network) by using at least some (for example, the LTE base station (BS) and the EPC) of the first network (for example, the 4G network or the 5G network).

According to various embodiments, the network environment 100A may include a network environment for providing wireless communication dual connectivity (multi-radio access technology (RAT) dual connectivity (MR-DC)) to the LTE BS and the NR base station (BS) and transmitting and/or receiving a control message to and from the electronic device 101 through one core network 430 of the EPC or the 5GC.

According to various embodiments, one of the LTE BS or the NR BS may operate as a first node 410 (for example, a master node (MN)) and the other one may operate as a second node 420 (for example, a secondary node (SN)). According to an embodiment, the first node 410 may be connected to the core network 430 to transmit and/receive a control message. According to an embodiment, the first node 410 and the second node 420 may be connected through a network interface to transmit and/or receive a message related to management of radio resources (for example, communication technology). According to an embodiment, the first node 410 may be configured as an LTE BS, the second node 420 may be configured as an NR BS, and the core network 430 may be configured as an EPC. For example, the electronic device 101 may transmit and/or receive the control message through the LTE BS and transmit and/or receive the user data through the LTE BS and the NR BS. According to an embodiment, the first node 410 may be configured as an NR BS, the second node 420 may be configured as an LTE BS, and the core network 430 may be configured as a 5GC. For example, the electronic device 101 may transmit and/or receive the control message through the NR BS and transmit and/receive the user data through the LTE BS and the NR BS.

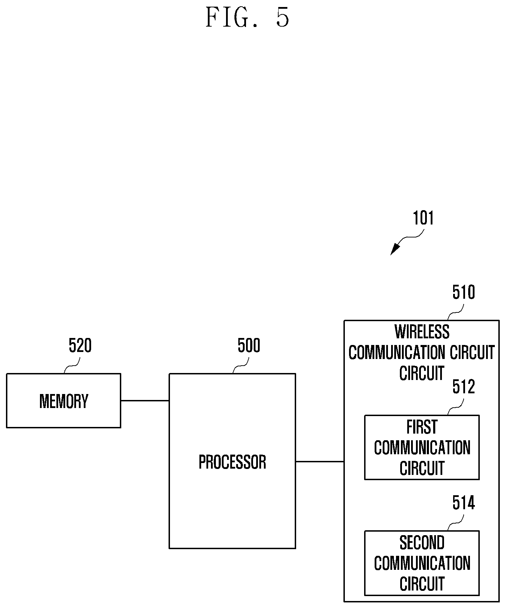

FIG. 5 is a block diagram of an electronic device supporting dual connectivity according to various embodiments. According to an embodiment, the electronic device 101 of FIG. 5 may be at least partially similar to the electronic device 101 of FIG. 1, 2, 3, or 4 or may further include other embodiments of the electronic device.

Referring to FIG. 5, according to various embodiments, the electronic device 101 may include a processor 500, a wireless communication circuit 510, and/or a memory 520. According to an embodiment, the processor 500 may be substantially the same as the processor 120 of FIG. 1 or may be included in the processor 120. The wireless communication circuit 510 may be substantially the same as the wireless communication module 192 of FIG. 1 or may be included in the wireless communication module 192. The memory 520 may be substantially the same as the memory 130 of FIG. 1 or may be included in the memory 130.

According to various embodiments, the processor 500 may be operatively connected to the wireless communication circuit 510 and/or the memory 520. According to an embodiment, the processor 500 may include an application processor (AP) (for example, the main processor 121 of FIG. 1) and/or a communication processor (CP) (for example, the auxiliary processor 123, the first communication processor 212 or the second communication processor 214 of FIG. 2). According to an embodiment, the communication processor may include a first processing part and a second processing part. For example, the first processing part may control the wireless communication circuit 510 (or the first communication circuit 512) to perform communication with a first node (for example, the first node 410 of FIG. 4) through a first network. For example, the first processing part may control the wireless communication circuit 510 (or the first communication circuit 512) to transmit and/or receive a control message and/or data to and/or from the first node through the first network. For example, the second processing part may control the wireless communication circuit 510 (or the second communication circuit 514) to perform communication with a second node (for example, the second node 420 of FIG. 4) through a second network. For example, the second processing part may transmit and/or receive data to/from the second node through the second network. In another example, the second processing part may transmit and/or receive a control message and/or data to and/or from the second node through the second network. For example, the first processing part and the second processing part may be configured as software which processes signals in different frequency bands and protocols. For example, the first processing part and the second processing part may be logically (for example, software) divided. In another example, the first processing part and the second processing part may be configured as different circuits or different hardware. For example, the first network may support a 4^{th}-generation communication scheme or a 5^{th}-generation communication scheme. For example, the second network may support a 4^{th}-generation communication scheme or a 5^{th}-generation communication scheme through a communication scheme different from the first network. For example, the 4^{th}-generation communication scheme may include at least one of long-term evolution (LTE), LTE-advanced (LTE-A), or LTE-advanced pro (LTE-A pro). For example, the 5^{th}-generation communication scheme may include new radio (NR).

According to various embodiments, the processor 500 may support dual connectivity of the first node (for example, the first node 410 of FIG. 4) supporting the first network and the second node (for example, the second node 420 of FIG. 4) supporting the second network through the wireless communication circuit 510. According to an embodiment, the dual connectivity of the electronic device 101 may include E-UTRA-NR dual connectivity (EN-DC) for transmitting and/or receiving a control message and data through the first node of the first network and transmitting and/or receiving data through the second node of the second network, NR-E-UTRA dual connectivity (NE-DC) for transmitting and/or receiving a control message and data through the second node of the second network and transmitting and/or receiving data through the first node of the first network, or NR-NR dual connectivity (NR-DC) for transmitting and/or receiving a control message and data through a third node supporting a first scheme (for example, about 6 GHz or lower) of the second network and transmitting and/or receiving data through a fourth node supporting a second scheme (for example, about 6 GHz or higher) of the second network.

According to various embodiments, the processor 500 may control the wireless communication circuit 510 (or the second communication circuit 514) to transmit a reference signal (for example, a sounding reference signal (SRS)) related to the second network (for example, the NR network). According to an embodiment, in an EN-DC environment, the processor 500 may identify uplink resources for transmission of the sounding reference signal (SRS) related to the second network (for example, the NR network) in an RRC control message (for example, an RRC reconfiguration message) received from the first node accessed through the first network (for example, the LTE network). According to an embodiment, in a standalone (SA) environment, the processor 500 may identify uplink resources for transmission of the sounding reference signal (SRS) related to the second network (for example, the NR network) in an RR control message received from the second node accessed through the second network (for example, the NR network). The processor 500 may control the wireless communication circuit 510 (or the second communication circuit 514) to periodically transmit the sounding reference signal (SRS) related to the second network (for example, the NR network) through the uplink resources allocated by the first node (or the second node). According to an embodiment, when the electronic device 101 includes a plurality of antennas, the processor 500 may control the wireless communication circuit 510 (or the second communication circuit 514) to transmit sounding reference signals at different time points through respective antennas.

According to various embodiments, the processor 500 may monitor whether data received from the first node of the first network (for example, the LTE network) has an error through the wireless communication circuit 510 (or the first communication circuit 512). According to an embodiment, when the electronic device 101 accesses the first node of the first network (for example, the LTE network) and the second node of the second network (for example, the NR network) through the wireless communication circuit 510, the processor 500 may determine whether the reference signal of the second network may act as interference to data received from the first node through the first network. The processor 500 may monitor whether an error is detected in the data received from the first node of the first network in order to determine whether interference by the reference signal of the second network is generated. For example, the processor 500 may identify an error generation rate of the data received from the first node on the basis of an ACK/NACK ratio of the data received from the first node during a predetermined unit (for example, subframe). For example, the error generation rate may include a block error rate (BLER).

According to various embodiments, the processor 500 may identify whether an error is periodically generated in the data received from the first node of the first network on the basis of the monitoring result of the data received from the first node of the first network (for example, the LTE network). According to an embodiment, the processor 500 may identify whether the error generation rate that satisfies a predetermined first condition is periodically detected on the basis of the monitoring result of the data received from the first node of the first network. For example, a state satisfying the predetermined first condition may include a state in which the error generation rate detected in the predetermined unit (for example, subframe) exceeds a reference error generation rate (for example, about 25%). In another example, the state satisfying the predetermined first condition may include a state in which the error generation rate detected in the predetermined unit is higher than an error generation rate in another predetermined unit by a reference ratio (for example, about 15%) or higher.

According to various embodiments, when the error is periodically detected in the data received from the first node of the first network (for example, the LTE network), the processor 500 may determine whether interference by the reference signal of the second network (for example, the NR network) is generated. According to an embodiment, when the error is periodically detected in the data received from the first node of the first network, the processor 500 may compare an error detection period with a transmission period of the reference signal related to the second network. For example, when the error detection period of the data received from the first node overlaps or at least partially overlaps the transmission period of the reference signal related to the second network, the processor 500 may determine that interference by the reference signal of the second network is generated. In another example, when the error detection period of the data received from the first node does not overlap the transmission period of the reference signal related to the second network, the processor 500 may determine that interference by the reference signal of the second network is not generated. For example, the transmission period of the reference signal related to the second network may be identified in the RRC control message received from the first node (or second node).

According to various embodiments, when it is determined that interference by the reference signal of the second network (for example, the NR network) is generated, the processor 500 may control transmission of the reference signal of the second network through the wireless communication circuit 510. According to an embodiment, the processor 500 may control the wireless communication circuit 510 to limit transmission of the reference signal of the second network on the basis of a bandwidth (or throughput) of the second network. According to an embodiment, the processor 500 may control the wireless communication circuit 510 to adjust a power amplification level related to transmission of the reference signal for at least one path among a plurality of paths for transmitting the reference signal of the second network. According to an embodiment, the processor 500 may control the wireless communication circuit 510 to limit transmission of the reference signal for at least one path among a plurality of paths for transmitting the reference signal of the second network. According to an embodiment, the processor 500 may control the wireless communication circuit 510 to adjust a transmission period of the reference signal of the second network.

According to various embodiments, the processor 500 may control the wireless communication circuit 510 to selectively transmit the reference signal of the second network on the basis of a bandwidth of the second network in order to reduce influence of interference by the reference signal of the second network (for example, the NR network). According to embodiment, when it is determined that interference by the reference signal of the second network is generated, the processor 500 may identify a ratio of the bandwidth of the second network to the entire bandwidth of the electronic device 101. When the ratio of the bandwidth of the second network satisfies a predetermined second condition, the processor 500 may control the wireless communication circuit 510 to limit transmission of the reference signal of the second network. For example, a state satisfying the predetermined second condition may include a state in which the ratio of the bandwidth of the second network is equal to or lower than a reference ratio (for example, about 40%). When the ratio of the bandwidth of the second network does not satisfy the predetermined second condition, the processor 500 may control the wireless communication circuit 510 to transmit the reference signal of the second network. For example, a state which does not satisfy the predetermined second condition may include a state in which the ratio of the bandwidth of the second network exceeds the reference ratio (for example, about 40%). For example, the bandwidth of the second network may include a bandwidth allocated by the first node (or the second node) to transmit and/or receive data through the second network. For example, the entire bandwidth of the electronic device 101 is a bandwidth which can be used to transmit and/or receive data by the electronic device 101 through the first network and/or the second network and may include a sum of the bandwidth (for example, the bandwidth of the first network) allocated by the first node to transmit and/or receive data through the first network and the bandwidth of the second network.

According to an embodiment, when it is determined that interference by the reference signal of the second network (for example, the NR network) is generated, the processor 500 may identify a ratio of throughput of the second network to the entire throughput of the electronic device 101. When the ratio of the throughput of the second network satisfies a predetermined third condition, the processor 500 may control the wireless communication circuit 510 to limit transmission of the reference signal of the second network. For example, a state satisfying the predetermined third condition may include a state in which the ratio of the throughput of the second network is equal to or lower than a reference ratio (for example, about 40%). When the ratio of the throughput of the second network does not satisfy the predetermined second condition, the processor 500 may control the wireless communication circuit 510 to transmit the reference signal of the second network. For example, the state which does not satisfy the predetermined second condition may include a state in which the ratio of the throughput of the second network exceeds the reference ratio (for example, about 40%). For example, the throughput of the second network may be configured on the basis of an amount of data transmitted and/or received through the second network for a predetermined time according to the bandwidth of the second network. For example, the entire throughput of the electronic device 101 is an amount of data transmitted and/or received to and/from the first node and/or the second node by the electronic device 101 through the first network and/or the second network for a predetermined time and may include a sum of the throughput of the first network and the throughput of the second network.

According to various embodiments, the processor 500 may control the wireless communication circuit 510 to adjust a power amplification level related to transmission of the reference signal in order to reduce influence of interference by the reference signal of the second network (for example, the NR network). According to an embodiment, the processor 500 may control the wireless communication circuit 510 to adjust a power amplification level related to transmission of the reference signal for at least one path of a plurality of paths for transmitting the reference signal of the second network. According to an embodiment, the processor 500 may detect an error generation rate of the pattern of each power amplification level by sequentially applying patterns of a plurality of power amplification levels. The processor 500 may control the wireless communication circuit 510 to transmit the reference signal in a pattern of the power amplification level having the lowest error generation rate (for example, BLER) among patterns of the plurality of power amplification levels. For example, the processor 500 may detect the error generation rate by sequentially applying the pattern of each power amplification level on the basis of priorities of the patterns of the plurality of power amplification levels. For example, the priorities of the patterns of the plurality of power amplification levels may be configured on the basis of a frequency band of the first network used by the electronic device 101 to communicate with the first node. For example, the pattern of the power amplification level may include a combination of power amplification levels used to transmit the reference signal through a plurality of paths (for example, reception paths).

According to various embodiments, the processor 500 may control the wireless communication circuit 510 to limit transmission of the reference signal for at least one path of a plurality of paths for transmitting the reference signal of the second network in order to reduce influence of interference by the reference signal of the second network (for example, the NR network). According to an embodiment, the processor 500 may identify a plurality of path patterns for transmitting the reference signal of the second network. The processor 500 may detect an error generation rate of each path pattern by sequentially applying the plurality of path patterns. The processor 500 may control the wireless communication circuit 510 to transmit the reference signal in the path pattern having the lowest error generation rate (for example, BLER) among the plurality of path patterns. For example, the processor 500 may detect the error generation rate by sequentially applying each path pattern on the basis of priorities of the plurality of path patterns. For example, the priorities of the plurality of path patterns may be configured on the basis of the frequency band of the first network used by the electronic device 101 to communicate with the first node. For example, the path pattern may include the sequence of paths for transmitting the reference signal by the electronic device 101.

According to various embodiments, the processor 500 may control the wireless communication circuit 510 to adjust the transmission period of the reference signal of the second network in order to reduce influence of interference by the reference signal of the second network (for example, the NR network). According to an embodiment, the processor 500 may control the wireless communication circuit 510 to expand the transmission period of the reference signal transmitted through at least one path of a plurality of paths to a predetermined period.

According to various embodiments, the processor 500 may reconstruct a transmission scheme of the reference signal of the second network on the basis of state information of the connection with the first node using the first network (for example, the LTE network) and/or state information of the connection with the second node using the second network (for example, the NR network). According to an embodiment, when the connection with the second node using the second network is released, the processor 500 may reconstruct the transmission scheme of the reference signal of the second network. According to an embodiment, when a secondary component carrier (SCC) of the first network is changed in the state in which the connection with the second node is maintained, the processor 500 may reconstruct the transmission scheme of the reference signal of the second network. According to an embodiment, when transmission of the reference signal of the second network is limited on the basis of the bandwidth (or throughput) of the second network, the processor 500 may activate transmission of the reference signal. According to an embodiment, the processor 500 may reconstruct a power amplification level related to transmission of the reference signal for at least one path of a plurality of paths for transmitting the reference signal of the second network. According to an embodiment, the processor 500 may release the limit of the transmission of the reference signal for at least one path of the plurality of paths for transmitting the reference signal of the second network. According to an embodiment, the processor 500 may reconstruct the transmission period of the reference signal of the second network.

According to various embodiments, the wireless communication circuit 510 may receive a signal from an external device (for example, the first node 410 and/or the second node 420 of FIG. 4) or transmit a signal to the external device through a plurality of antennas (not shown). According to an embodiment, the wireless communication circuit 510 may include a first communication circuit 512 and a second communication circuit 514. For example, the first communication circuit 512 may transmit and/or receive a control message and/or data to and/or from the first node (for example, the first node 410 of FIG. 4) through the first network (for example, the LTE network). For example, the second communication circuit 514 may transmit and/or receive a control message and/or data to and/or from the second node (for example, the second node 420 of FIG. 4) through the second network (for example, the NR network). For example, the first communication circuit 512 and the second communication circuit 514 may be configured as different circuits or different hardware. For example, the first communication circuit 512 and the second communication circuit 514 may be logically (for example, software) divided parts.

According to various embodiments, the memory 520 may store various pieces of data used by at least one element (for example, the processor 500 or the wireless communication circuit 510) of the electronic device 101. According to an embodiment, data may include at least one piece of information related to patterns of a plurality of power amplification levels, information related to patterns of a plurality of paths, information related to a reference error generation rate, or information related to a reference ratio. According to an embodiment, the memory 520 may store various instructions which can be executed through the processor 500.

According to various embodiments, the processor 500 may control transmission of the reference signal of the second network through the wireless communication circuit 510 on the basis of the generation of an event related to the reference signal of the second network (for example, the NR network). According to an embodiment, when accessing to the second node of the second network through the wireless communication circuit 510, the processor 500 may identify whether an event related to the reference signal of the second network is generated. When it is determined that the event related to the reference signal of the second network is generated, the processor 500 may control transmission of the reference signal of the second network through the wireless communication circuit 510. For example, the event related to the reference signal of the second network may be generated on the basis of driving of an element physically adjacent to the wireless communication circuit 510 (or the second communication circuit 514) among elements included in the electronic device 101. For example, the event related to the reference signal of the second network may be generated when a camera (not shown) is driven in the state in which the electronic device 101 accesses the second node of the second network through the wireless communication circuit 510. For example, the event related to the reference signal of the second network may be generated when WLAN communication is performed in the state in which the electronic device 101 accesses the second node of the second network through the wireless communication circuit 510. For example, the processor 500 may adjust a power amplification level related to transmission of the reference signal for at least one path of a plurality of paths for transmitting the reference signal of the second network on the basis of the generation of the event related to the reference signal of the second network. For example, the processor 500 may limit transmission of the reference signal for at least one path of the plurality of paths for transmitting the reference signal of the second network on the basis of the generation of the event related to the reference signal of the second network. For example, the processor 500 may adjust a transmission period of the reference signal of the second network on the basis of the generation of the event related to the reference signal of the second network.

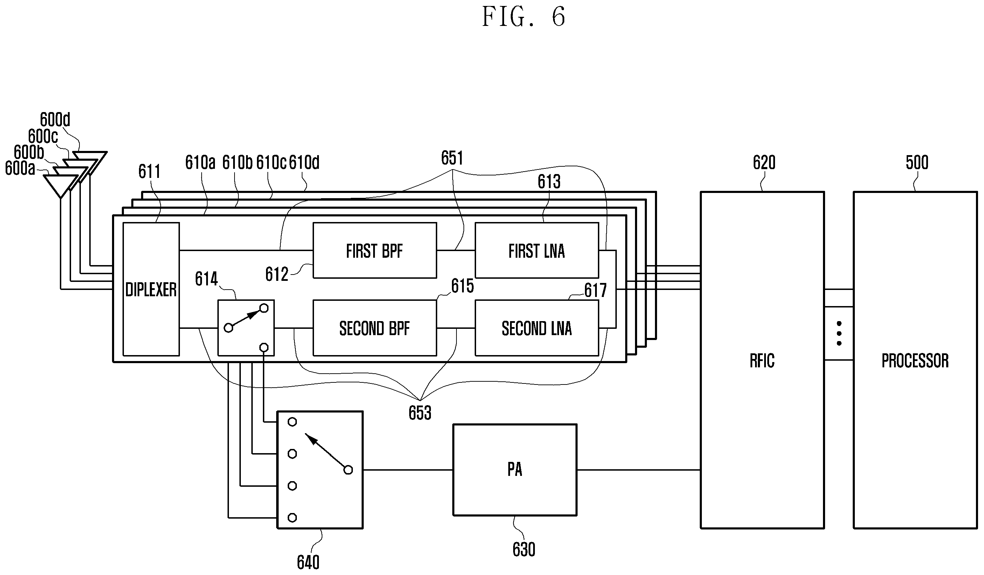

FIG. 6 is a block diagram of an electronic device for controlling transmission of a reference signal according to various embodiments. According to an embodiment, the electronic device 101 of FIG. 6 may be at least partially similar to the electronic device 101 of FIG. 1, 2, 3, 4, or 5 or may further include other embodiments of the electronic device.

Referring to FIG. 6, according to various embodiments, the electronic device 101 may include the processor 500, a plurality of antennas 600a, 600b, 600c, 600d, a plurality of radio frequency front ends (RFFEs) 610a, 610b, 610c, and 610d, and a radio frequency integrated circuit (RFIC) 620. According to an embodiment, the plurality of RFFEs 610a, 610b, 610c, and 610d and the RFIC 620 may be substantially the same as the wireless communication circuit 510 of FIG. 5 or may be included in the wireless communication circuit 510. According to an embodiment, each antenna 600a, 600b, 600c, or 600d may transmit and/or receive RF signals in a plurality of frequency bands. For example, each antenna 600a, 600b, 600c, or 600d may support at least some of a frequency band of the first network (for example, the LTE network) or a frequency band (for example, a frequency band equal to or lower than 6 GHz) of the second network (for example, the NR network).

According to an embodiment, the electronic device 101 may include four antennas (or antenna structures). However, the number of antennas (or antenna structures) included in the electronic device 101 may not be limited thereto.

According to various embodiments, the first RFFE 610a (for example, the third RFFE 236 of FIG. 2) may process an RF signal transmitted and/or received through the first antenna 600a. According to an embodiment, the first RFFE 610a may include a diplexer 611, a first path 651 for processing a signal received from the first node through the first network, and a second path 653 for processing a signal received from the second node through the second network. According to another embodiment, the first RFFE 610a may include the diplexer 611, the first path 651 for processing a signal in a first frequency band, and the second path 653 for processing a signal in a second frequency band.

According to various embodiments, the diplexer 611 may divide the RF signal received through the first antenna 600a into a plurality of signals on the basis of a cut off frequency. According to an embodiment, the diplexer 611 may separate a first signal in a frequency band lower than the cut off frequency from the RF signal received through the first antenna 600a and provide the first signal to the first path 651. According to an embodiment, the diplexer 611 may separate a second signal in a frequency band higher than the cut off frequency from the RF signal received through the first antenna 600a and provide the second signal to the second path 653.

According to various embodiments, a first band pass filter (BPF) 612 may be disposed in a first point of the first path 651 and filter a signal corresponding to the first frequency band of the first network in the first signal (for example, the signal in the frequency band lower than the cut off frequency) provided from the diplexer 611. According to an embodiment, the first band pass filter 612 may extract at least a portion corresponding to the first frequency band of the first network from the first signal provided from the diplexer 611 and provide the portion to a first low noise amplifier 613. For example, the first frequency band of the first network may include a frequency band used by the electronic device 101 for communication with the first node through the first network. For example, the first point may be relatively adjacent to the diplexer 611 in the first path 651.

According to various embodiments, the first low noise amplifier (LNA) 613 may be disposed in a second point of the first path 651 different from the first point and may low-noise amplify and output the filtered signal provided from the first band pass filter 612. According to an embodiment, the first low noise amplifier 613 may low-noise amplify the signal of the first network provided from the first band pass filter 612 and output the signal to the RFIC 620. For example, the second point may be disposed between the first point and the RFIC 620 in the first path 651.

According to various embodiments, a first switch 614 may be disposed in a third point of the second path 653 and may selectively connect the second path 653 for the second network to a transmission path for transmitting the reference signal. According to an embodiment, when a signal is received from the second node through the second network on the basis of the control of the processor 500, the first switch 614 may connect the diplexer 611 to the second band pass filter 615. According to an embodiment, when the reference signal is transmitted through the second network on the basis of the control of the processor 500, the first switch 614 may connect the diplexer 611 to the second switch 640. For example, the third point may be relatively adjacent to the diplexer 611 in the second path 653.

According to various embodiments, the second band pass filter (BPF) 615 may be disposed in a fourth point of the second path 653 and may filter a signal corresponding to the second frequency band of the second network in the second signal (for example, the signal in the frequency band higher than the cut off frequency) provided from the diplexer 611 through the first switch 614. According to an embodiment, the second band pass filter 615 may extract at least a portion corresponding to the second frequency band of the second network from the second signal provided from the diplexer 611 and provide the portion to a second low noise amplifier 617. For example, the second frequency band of the second network may include a frequency band used by the electronic device 101 for communication with the second node through the second network. For example, the fourth point may be disposed between the third point and the second low noise amplifier 617 in the second path 653.

According to various embodiments, the second low noise amplifier (LNA) 617 may be disposed in a fifth point of the second path 653 and may amplify and output the filtered signal provided from the second band pass filter 615. According to an embodiment, the second low noise amplifier 617 may low-noise amplify the signal of the second network provided from the second band pass filter 615 and output the signal to the RFIC 620. For example, the fifth point may be disposed between the fourth point and the RFIC 620 in the second path 653.

According to various embodiments, the second RFFE 610b (for example, the third RFFE 236 of FIG. 2) may process the RF signal transmitted and/or received through the second antenna 600b. According to an embodiment, the second RFFE 610b may be configured and may operate similar to the first RFFE 610a. Accordingly, in order to avoid overlapping with the description of the first RFFE 610a, a detailed description of the second RFFE 610b is omitted.

According to various embodiments, the third RFFE 610c (for example, the third RFFE 236 of FIG. 2) may process the RF signal transmitted and/or received through the third antenna 600c. According to an embodiment, the third RFFE 610c may be configured and may operate similar to the first RFFE 610a. Accordingly, in order to avoid overlapping with the description of the first RFFE 610a, a detailed description of the third RFFE 610c is omitted.

According to various embodiments, the fourth RFFE 610d (for example, the third RFFE 236 of FIG. 2) may process the RF signal transmitted and/or received through the fourth antenna 600d. According to an embodiment, the fourth RFFE 610d may be configured and may operate similar to the first RFFE 610a. Accordingly, in order to avoid overlapping with the description of the first RFFE 610a, a detailed description of the fourth RFFE 610d is omitted.

According to various embodiments, when the transmission period of the reference signal of the second network arrives, the electronic device 101 may transmit the reference signal of the second network. According to an embodiment, the electronic device 101 may transmit the reference signal through resources related to the reference signal allocated by the first node (or the second node). For example, when a first time point arrives on the basis of the resources related to the reference signal allocated by the first node (or the second node), the processor 500 may control the RFIC 620, a power amplifier (PA) 630, and/or the second switch 640 to transmit the reference signal through the first antenna 600a. For example, when a second time point arrives on the basis of the resources related to the reference signal allocated by the first node (or the second node), the processor 500 may control the RFIC 620, the power amplifier 630, and/or the second switch 640 to transmit the reference signal through the second antenna 600b. For example, when a third time point arrives on the basis of the resources related to the reference signal allocated by the first node (or the second node), the processor 500 may control the RFIC 620, the power amplifier 630, and/or the second switch 640 to transmit the reference signal through the third antenna 600c. For example, when a fourth time point arrives on the basis of the resources related to the reference signal allocated by the first node (or the second node), the processor 500 may control the RFIC 620, the power amplifier 630, and/or the second switch 640 to transmit the reference signal through the fourth antenna 600d. For example, the power amplifier 630 and the second switch 640 may be physically separated. In another example, the power amplifier 630 and the second switch 640 may be implemented within a single chip or a single package. For example, the first time point, the second time point, the third time point, and/or the fourth time point may include different time points or periodically arriving different time points.

According to an embodiment, the power amplifier 630 may amplify power of the reference signal of the second network provided from the RFIC 620. For example, when the first time point arrives, the power amplifier 630 may amplify power of the reference signal to a power amplification level (for example, about 0 dB) corresponding to the first antenna 600a (or the first RFFE 610a). For example, when the second time point arrives, the power amplifier 630 may amplify power of the reference signal to a power amplification level (for example, about 3 dB) corresponding to the second antenna 600b (or the second RFFE 610b). For example, when the third time point arrives, the power amplifier 630 may amplify power of the reference signal to a power amplification level (for example, about 3 dB) corresponding to the third antenna 600c (or the third RFFE 610c). For example, when the fourth time point arrives, the power amplifier 630 may amplify power of the reference signal to a power amplification level (for example, about 3 dB) corresponding to the fourth antenna 600d (or the fourth RFFE 610d).

According to an embodiment, the second switch 640 may connect the power amplifier 630 to each antenna 600a, 600b, 600c, or 600d (or RFFE 610a, 610b, 610c, or 610d) on the basis of a path pattern for transmitting the reference signal. For example, when the first time point arrives, the second switch 640 may connect the power amplifier 630 to the first RFFE 610a (or the first switch 614) to transmit the reference signal of the second network through the first antenna 600a. For example, when the second time point arrives, the second switch 640 may connect the power amplifier 630 to the second RFFE 610b to transmit the reference signal of the second network through the second antenna 600b. For example, when the third time point arrives, the second switch 640 may connect the power amplifier 630 to the third RFFE 610c to transmit the reference signal of the second network through the third antenna 600c. For example, when the fourth time point arrives, the second switch 640 may connect the power amplifier 630 to the fourth RFFE 610d to transmit the reference signal of the second network through the fourth antenna 600d.

According to various embodiments, when transmission of the reference signal of the second network is limited on the basis of the bandwidth of the second network in order to reduce influence of interference by the reference signal of the second network, the processor 500 may control the first switch 614 and/or the second switch 640 to limit transmission of the reference signal. According to an embodiment, when the transmission of the reference signal is limited, the first switch 614 may maintain the connection between the diplexer 611 and the second band pass filter 615. According to an embodiment, when the transmission of the reference signal is limited, the second switch 640 may block the connection between the power amplifier 630 and the plurality of antennas 600a, 600b, 600c, and 600d (or plurality of RFFEs 610a, 610b, 610c, and 610d).

According to various embodiments, the processor 500 may control the power amplifier 630 and/or the RFIC 620 to adjust the power amplification level related to the transmission of the reference signal for at least one path in order to reduce influence of interference by the reference signal of the second network. According to an embodiment, the processor 500 may control the RFIC 620 to adjust the power amplification level through a transmission gain control (transmit automatic gain control (TxAGC)) related to the transmission of the reference signal for at least one path. According to an embodiment, the processor 500 may adjust the power amplification level of at least one path on the basis of a value for calibration of each of the plurality of paths for transmitting the reference signal of the second network. For example, when the second time point arrives on the basis of a first pattern of the power amplification level, the processor 500 may control the power amplifier 630 and/or the RFIC 620 to adjust the power amplification level of the reference signal to a changed power amplification level (for example, about -5 dB) corresponding to the second antenna 600b (or the second RFFE 610b). For example, power amplification levels of the first time point, the third time point, and the fourth time point may be maintained to be the same as those before the power amplification level related to the transmission of the reference signal is adjusted. For example, when the third time point arrives on the basis of a second pattern of the power amplification level, the processor 500 may control the power amplifier 630 and/or the RFIC 620 to adjust the power amplification level of the reference signal to a changed power amplification level (for example, about -5 dB) corresponding to the third antenna 600c (or the third RFFE 610c). For example, power amplification levels of the first time point, the third time point, and the fourth time point may be maintained to be the same as those before the power amplification level related to the transmission of the reference signal is adjusted. For example, when the fourth time point arrives on the basis of a third pattern of the power amplification level, the processor 500 may control the power amplifier 630 and/or the RFIC 620 to adjust the power amplification level of the reference signal to a changed power amplification level (for example, about -5 dB) corresponding to the fourth antenna 600d (or the fourth RFFE 610d). For example, power amplification levels of the first time point, the second time point, and the third time point may be maintained to be the same as those before the power amplification level related to the transmission of the reference signal is adjusted. For example, when the second time point, the third time point, and the fourth time point arrive on the basis of a fourth patter of the power amplification level, the processor 500 may control the power amplifier 630 and/or the RFIC 620 to adjust the power amplification level of the reference signal to the changed power amplification level (for example, about -5 dB).

According to various embodiments, the processor 500 may control the RFIC 620, the power amplifier 630, and/or the second switch 640 to limit transmission of the reference signal for at least one path in order to reduce influence of interference by the reference signal of the second network. According to an embodiment, when the second time point arrives on the basis of the first path pattern, the second switch 640 may connect the power amplifier 630 to the first RFFE 610a to limit transmission of the reference signal through the second antenna 600b. For example, when the second time point arrives, the second switch 640 may connect the power amplifier 630 to the first RFFE 610a to transmit the reference signal for the first antenna 600a instead of the reference signal for the second antenna 600b. For example, the paths for transmitting the reference signal at the first time point, the third time point, and the fourth time point may be maintained to be the same as those before the transmission of the reference signal for at least one path is limited. According to another embodiment, when the second time point arrives on the basis of the first path pattern, the second switch 640 may block the connection between the power amplifier 630 and the second RFFE 610b to limit transmission of the reference signal through the second antenna 600b.

According to an embodiment, when the third time point arrives on the basis of the second path pattern, the second switch 640 may connect the power amplifier 630 to the first RFFE 610a to limit transmission of the reference signal through the third antenna 600c. For example, when the third time point arrives, the second switch 640 may connect the power amplifier 630 to the first RFFE 610a to transmit the reference signal for the first antenna 600a instead of the reference signal for the third antenna 600c. For example, the paths for transmitting the reference signal at the first time point, the second time point, and the fourth time point may be maintained to be the same as those before the transmission of the reference signal for at least one path is limited. According to another embodiment, when the third time point arrives on the basis of the second path pattern, the second switch 640 may block the connection between the power amplifier 630 and the third RFFE 610c to limit transmission of the reference signal through the third antenna 600c.

According to an embodiment, when the fourth time point arrives on the basis of the third path pattern, the second switch 640 may connect the power amplifier 630 to the first RFFE 610a to limit transmission of the reference signal through the fourth antenna 600d. For example, when the fourth time point arrives, the second switch 640 may connect the power amplifier 630 to the first RFFE 610a to transmit the reference signal for the first antenna 600a instead of the reference signal for the fourth antenna 600d. For example, the paths for transmitting the reference signal at the first time point, the second time point, and the third time point may be maintained to be the same as those before the transmission of the reference signal for at least one path is limited. According to another embodiment, when the fourth time point arrives on the basis of the third path pattern, the second switch 640 may block the connection between the power amplifier 630 and the fourth RFFE 610d to limit transmission of the reference signal through the fourth antenna 600d.

According to an embodiment, when the second time point, the third time point, and the fourth time point arrive on the basis of the fourth path pattern, the second switch 640 may connect the power amplifier 630 to the first RFFE 610a to limit transmission of the reference signal through the second antenna 600b, the third antenna 600c, and the fourth antenna 600d. For example, when the second time point, the third time point, and the fourth time point arrive, the second switch 640 may connect the power amplifier 630 to the first RFFE 610a to transmit the reference signal for the first antenna 600a instead of the reference signal for the second antenna 600b, the third antenna 600c, and the fourth antenna 600d. According to another embodiment, when the second time point, the third time point, and the fourth time point arrive on the basis of the fourth path pattern, the second switch 640 may block the connection between the power amplifier 630 and the second RFFE 610b, the third RFFE 610c, or the fourth RFFE 610d.

According to various embodiments, the processor 500 may control the RFIC 620, the power amplifier 630, and/or the second switch 640 to change a transmission period of the reference signal in order to reduce influence of interference by the reference signal of the second network. According to an embodiment, when the second time point, the third time point, and the fourth time point arrive during the first period for transmitting the reference signal, the second switch 640 may block the connection between the power amplifier 630 and the second RFFE 610b, the third RFFE 610c, or the fourth RFFE 610d to limit transmission of the reference signal through the second antenna 600b, the third antenna 600c, and the fourth antenna 600d. For example, when the first time point arrives during the first period, the second switch 640 may connect the power amplifier 630 to the first RFFE 610a for transmission of the reference signal through the first antenna 600a. According to an embodiment, when each time point arrives during the second period for transmitting the reference signal, the second switch 640 may connect the power amplifier 630 to each RFFE 610a, 610b, 610c, or 610d to transmit the reference signal through each antenna 600a, 600b, 600c, or 600d.

According to an embodiment, when the second time point, the third time point, and the fourth time point arrive during the first period and the second period for transmitting the reference signal, the second switch 640 may block the connection between the power amplifier 630 and the second RFFE 610b, the third RFFE 610c, or the fourth RFFE 610d to limit transmission of the reference signal through the second antenna 600b, the third antenna 600c, and the fourth antenna 600d. For example, when the first time point arrives during the first period and the second period, the second switch 640 may connect the power amplifier 630 to the first RFFE 610a for transmission of the reference signal through the first antenna 600a. According to an embodiment, when each time point arrives during the third period for transmitting the reference signal, the second switch 640 may connect the power amplifier 630 to each RFFE 610a, 610b, 610c, or 610d to transmit the reference signal through each antenna 600a, 600b, 600c, or 600d.

According to various embodiments, an electronic device (for example, the electronic device 101 of FIG. 1, 2, 3, 4, 5, or 6) may include a plurality of antennas (for example, the antenna module 197 of FIG. 1, the antennas 248 of FIG. 2, or the antennas 600a, 600b, 600c, and 600d of FIG. 6), a first communication circuit (for example, the wireless communication module 192 of FIG. 1 or 2 or the second communication circuit 514 of FIG. 5) configured to perform communication of a first network with a first node, and at least one processor (for example, the processor 120 of FIG. 1 or 2 or the processor 500 of FIG. 5) operatively connected to the first communication circuit, and the processor may be configured to perform the communication of the first network with the first node through the first communication circuit, identify whether an event related to transmission control of a reference signal of the first network is generated, based on operation state information of the electronic device, and in case that the event related to the transmission control of the reference signal is generated, limit transmission of the reference signal for at least one path of a plurality of paths corresponding to the plurality of antennas and transmit the reference signal of the first network through remaining at least one path.

According to various embodiments, the electronic device may further include a second communication circuit (for example, the wireless communication module 192 of FIG. 1 or 2 or the first communication circuit 512 of FIG. 5) configured to perform communication of a second network with a second node, and the processor may be configured to perform the communication of the second network with the second node through the second communication circuit, and perform the communication of the first network with the first node, based on control information received from the second node through the communication of the second network.

According to the invention, the processor is configured to, in case that the communication of the first network is performed with the first node and the communication of the second network is performed with the second node, identify whether an error related to the communication of the second network is generated and, in case that the error related to the communication of the second network is generated by the reference signal of the first network, limit transmission of the reference signal for at least one path of the plurality of paths and transmit the reference signal of the first network through remaining at least one path.

According to various embodiments, the processor may be configured to, in case that the error related to the communication of the second network is detected, identify an error generation period and, in case that the generation period of the error related to the communication of the second network at least partially overlaps a transmission period of the reference signal of the first network, determine that the error related to the communication of the second network is generated by the reference signal of the first network.

According to various embodiments, the transmission period of the reference signal of the first network may be identified, based on a radio resource control (RRC) control signal received from the second node.

According to various embodiments, the processor may be configured to, in case that the event related to transmission control of the reference signal is generated, identify an error generation rate of each of a plurality of predefined path patterns, select one path pattern from among the plurality of path patterns, based on the error generation rate, identify the at least one path for limiting transmission of the reference signal among the plurality of paths, based on the selected path pattern, and transmit the reference signal of the first network through remaining at least one path except for the at least one path among the plurality of paths.

According to various embodiments, the processor may be configured to, in case that a transmission time point corresponding to each of the remaining at least one path arrives, transmit the reference signal through a path corresponding to the transmission time point.

According to various embodiments, the processor may be configured to, in case that a transmission time point corresponding to the at least one path for limiting the transmission of the reference signal among the plurality of paths arrives, transmit the reference signal through a reference path among the plurality of paths.

According to various embodiments, the processor may be configured to, in case that at least one element physically adjacent to the first communication circuit among elements of the electronic device is operated, determine that the event related to the transmission control of the reference signal is generated.

According to various embodiments, the reference signal of the first network may include a sounding reference signal (SRS).

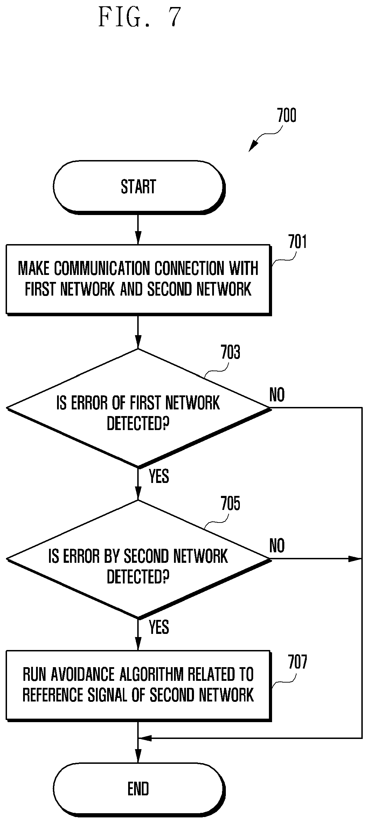

FIG. 7 is a flowchart 700 illustrating a process in which an electronic device controls transmission of a reference signal according to various embodiments. In the following embodiment, operations may be sequentially performed but the sequential performance is not necessary. For example, the order of operations may be changed, and at least two operations may be performed in parallel. For example, the electronic device of FIG. 7 may be the electronic device 101 of FIG. 1, 2, 3, 4, 5, or 6.

Referring to FIG. 7, according to various embodiments, the electronic device (for example, the processor 120 of FIG. 1 or the processor 500 of FIG. 5) may connect a first node (for example, the first node 410 of FIG. 4) of a first network to a second node (for example, the second node 420 of FIG. 4) of a second network in operation 701. According to an embodiment, the first communication circuit 512 may make a radio resource control (RRC) connection with the first node (for example, the first node 410 of FIG. 4) for supporting the first network. The second communication circuit 514 may communicate with the second node (for example, the second node 420 of FIG. 4) supporting the second network on the basis of control information related to the connection of a second network provided from the first communication circuit 512. For example, the first network may include at least one of one scheme of the 4^{th}-generation mobile communication schemes (for example, LTE, LTE-A, and LTE-A pro) or one scheme of the 5^{th}-generation communication schemes (for example, 5G or NR). For example, the second network may include one scheme (for example, using a frequency band of about 6 GHz or higher) of the 5^{th}-generation communication schemes (for example, 5G) or one scheme of the 4^{th}-generation mobile communication schemes (for example, LTE, LTE-A, and LTE-A pro).

According to various embodiments, the electronic device (for example, the processor 120 or 500) may identify whether an error is periodically detected in a signal (or data) received from a first node through the first network in operation 703. According to an embodiment, when the electronic device 101 has a communication connection with the first node through the first network and a communication connection with the second node through the second network, the processor 500 may monitor an error of data received from the first node of the first network. For example, the processor 500 may identify an error generation rate of data received from the first node (for example, the first node 410 of FIG. 4) through the first network during a predetermined unit (for example, subframe). When an error generation rate of data satisfying a predetermined first condition is periodically detected, the processor 500 may determine that the error is periodically detected in a signal (or data) received from the first node through the first network. For example, a state satisfying the predetermined first condition may include a state in which the error generation rate of the predetermined unit (for example, subframe) exceeds a reference error generation rate (for example, about 25%). In another example, the state satisfying the predetermined first condition may include a state in which the error generation rate of the predetermined unit is higher than an error generation rate of another predetermined unit by a reference ratio (for example, about 15%) or more. For example, the error generation rate of data may be determined on the basis of an ACK/NACK ratio of data received from the first node for a predetermined time.

According to various embodiments, when the error is not periodically detected in the signal (or data) received from the first node through the first network (for example, 'No' of operation 703), the electronic device (for example, the processor 120 or 500) may end an embodiment for controlling transmission of the reference signal. According to an embodiment, when the error generation rate satisfying the predetermined first condition is not detected or the error generation rate satisfying the predetermined first condition is not periodically detected, the processor 500 may determine that interference by the reference signal of the second network is not generated and end an embodiment for controlling transmission of the reference signal. For example, the state which does not satisfy the predetermined first condition may include a state in which the error generation rate of the predetermined unit (for example, subframe) is equal to or lower than the reference error generation rate (for example, about 25%). In another example, the state that does not satisfy the predetermined first condition may include a state in which the error generation rate of the predetermined unit is lower than the error generation rate of another predetermined unit by the reference ratio (for example, about 15%).

According to various embodiments, when the error is periodically detected in the signal (or data) received from the first node through the first network (for example, 'Yes' of operation 703), the electronic device (for example, the processor 120 or 500) identify whether the error detected in the signal (or data) received from the first node through the first network is generated by the reference signal of the second network in operation 705. According to an embodiment, when the error is periodically detected in the data received from the first node of the first network, the processor 500 may compare an error detection period of the data received from the first node with a transmission period of the reference signal related to the second network. For example, when the error detection period of the data received from the first node overlaps or at least partially overlaps the transmission period of the reference signal related to the second network, the processor 500 may determine that interference by the reference signal of the second network is generated. In another example, when the error detection period of the data received from the first node does not overlap the transmission period of the reference signal related to the second network, the processor 500 may determine that interference by the reference signal of the second network is not generated. For example, the transmission period of the reference signal related to the second network may be identified in the RRC control message received from the first node (or second node).

According to various embodiments, when it is determined that the error detected in the signal (data) received from the first node through the first network is not generated by the reference signal of the second network (for example, 'No' of operation 705), the electronic device (for example, the processor 120 or 500) may end an embodiment for controlling transmission of the reference signal.

According to various embodiments, when it is determined that the error detected in the signal (data) received from the first node through the first network is generated by the reference signal of the second network (for example, 'Yes' of operation 705), the electronic device (for example, the processor 120 or 500) may run an avoidance algorithm related to the reference signal of the second network. According to an embodiment, when the avoidance algorithm related to the reference signal of the second network is run, the processor 500 may limit transmission of the reference signal of the second network on the basis of a bandwidth (or throughput) of the second network. According to an embodiment, when the avoidance algorithm related to the reference signal of the second network is run, the processor 500 may adjust a power amplification level related to transmission of the reference signal for at least one path of a plurality of paths for transmitting the reference signal of the second network. According to the invention, when the avoidance algorithm related to the reference signal of the second network is run, the processor 500 limits transmission of the reference signal for at least one path of the plurality of paths for transmitting the reference signal of the second network. According to an embodiment, when the avoidance algorithm related to the reference signal of the second network is run, the processor 500 may adjust a transmission period of the reference signal of the second network.

According to various embodiments, the electronic device 101 may end the avoidance algorithm related to the reference signal of the second network on the basis of state information of the connection with the first node using the first network and/or state information of the connection with the second node using the second network. According to an embodiment, when the connection with the second node using the second network is released, the processor 500 may end the avoidance algorithm related to the reference signal of the second network. According to an embodiment, when a secondary component carrier (SCC) of the first network is changed in the state in which the connection with the second node is maintained, the processor 500 may end the avoidance algorithm related to the reference signal of the second network. For example, the end of the avoidance algorithm related to the reference signal of the second network may include a series of operations for reconstructing a transmission scheme of the reference signal of the second network to the scheme before transmission of the reference signal of the second network is controlled on the basis of the event related to the reference signal of the second network.

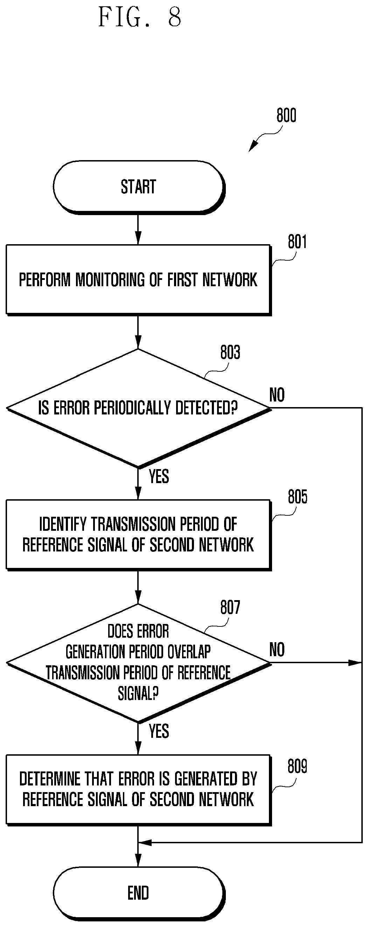

FIG. 8 is a flowchart 800 illustrating a process in which the electronic device detects an error by the reference signal of the second network according to various embodiments. According to an embodiment, operations of FIG. 8 may be detailed operations of operation 703 and operation 705 of FIG. 7. In the following embodiment, operations may be sequentially performed but the sequential performance is not necessary. For example, the order of operations may be changed, and at least two operations may be performed in parallel. For example, the electronic device of FIG. 8 may be the electronic device 101 of FIG. 1, 2, 3, 4, 5, or 6.

Referring to FIG. 8, according to various embodiments, an electronic device (for example, the processor 120 of FIG. 1 or the processor 500 of FIG. 5) may access the first node through the first network and, when accessing the second node through the second network (for example, operation 701 of FIG. 7), monitor the reception performance related to the first network in operation 801. According to an embodiment, the processor 500 may identify an error generation rate of data received from the first node (for example, the first node 410 of FIG. 4) through the first network. For example, the error generation rate of data may be determined on the basis of an ACK/NACK ratio of the data received from the first node during a predetermined unit (for example, subframe).

According to various embodiments, the electronic device (for example, the processor 120 or 500) may identify whether an error is periodically generated on the basis of the monitoring result of the reception performance related to the first network in operation 803. According to an embodiment, the processor 500 may identify whether an error generation rate satisfying a predetermined first condition is periodically detected.

According to various embodiments, when it is determined that the error is not periodically generated (for example, 'No' of operation 803), the electronic device (for example, the processor 120 or 500) may end an embodiment for detecting the error by the reference signal of the second network. According to an embodiment, when the error generation rate satisfying the predetermined first condition is not detected or the error generation rate satisfying the predetermined first condition is not periodically detected, the processor 500 may determine that interference by the reference signal of the second network is not generated.

According to various embodiments, when it is determined that the error is periodically generated (for example, 'Yes' of operation 803), the electronic device (for example, the processor 120 or 500) may identify a transmission period of the reference signal related to the second network in operation 805. According to an embodiment, in the case of an EN-DC environment, the processor 500 may transmit information related to a function of the electronic device 101 to the first node on the basis of a "UE capability enquiry" received from the first node through the first network. According to an embodiment, the first node may determine whether the electronic device 101 can transmit a sounding reference signal on the basis of the information related to the function of the electronic device 101, as shown in [Table 1] (for example, 3GPP TS 38.331 standard).

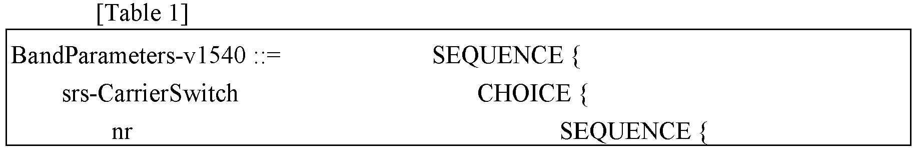

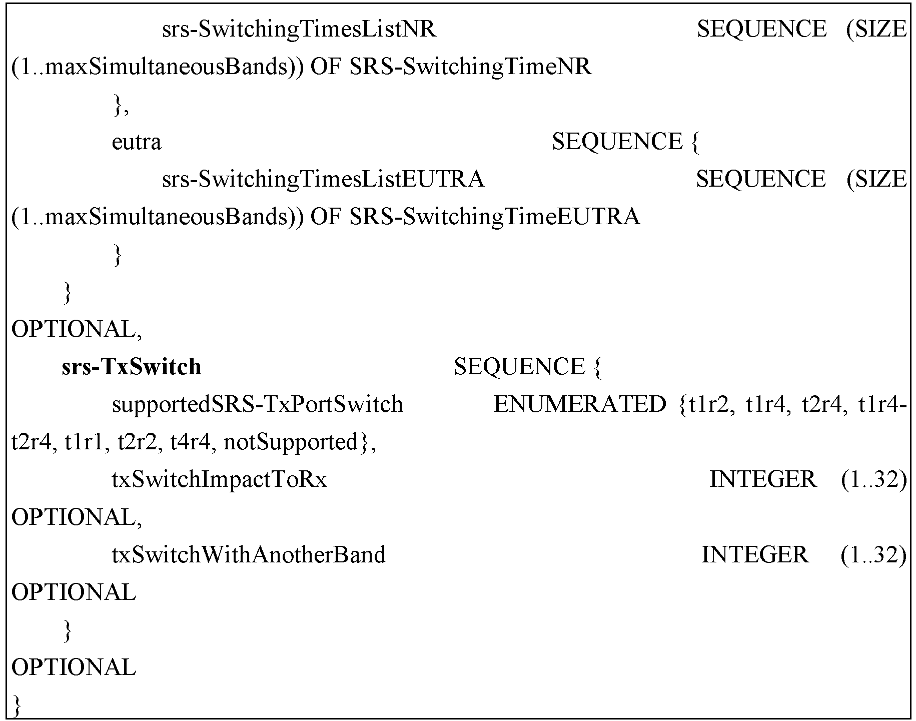

According to an embodiment, when it is determined that the electronic device 101 can transmit the sounding reference signal on the basis of the information related to the function of the electronic device 101, the first node may transmit information related to transmission resources of the reference signal to the electronic device 101 through an RRC control message.

In an embodiment, the processor 500 may identify a transmission period of the sounding reference signal (SRS) related to the second network in the RRC control message, as shown in [Table 2] (for example, 3GPP TS 38.331 standard) received from the first node.

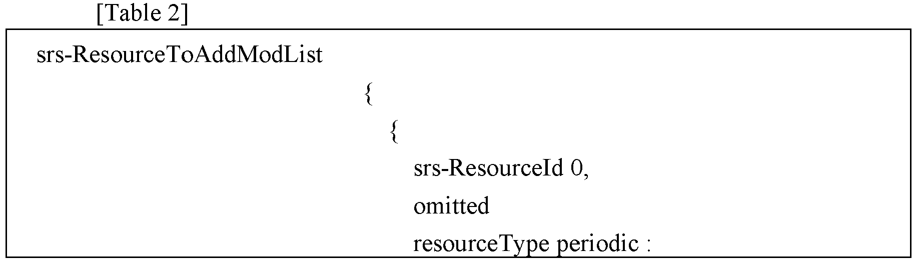

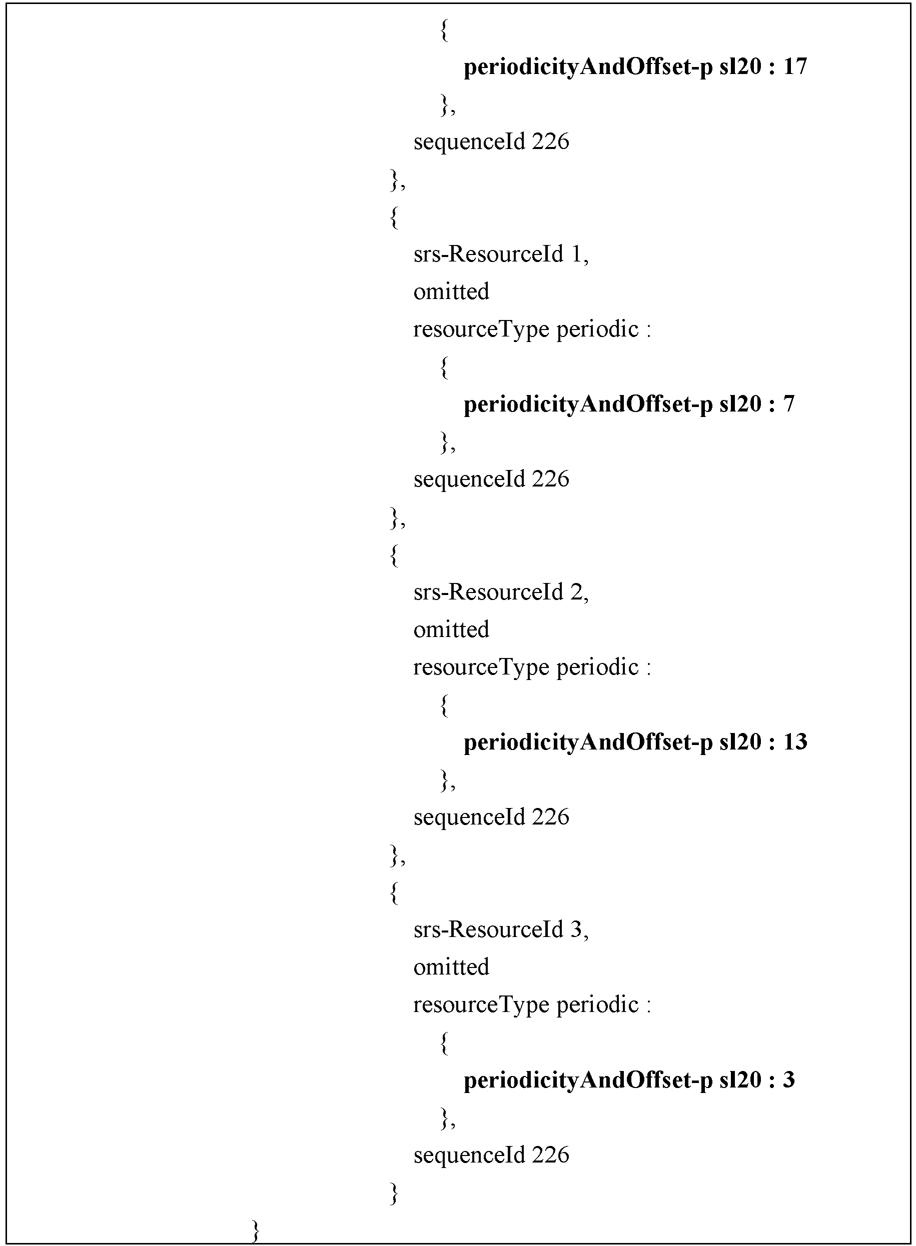

For example, [Table 2] may include information related to a period for transmitting the SRS within 20 slots (for example, sl20) through 4 antennas. For example, "periodicityAndOffset-p sl20: 17" may include resource allocation information for transmission of the SRS through a first antenna (for example, the first antenna 600a of FIG. 6) in a 17^{th} slot in every 20 slots. For example, "periodicityAndOffset-p sl20: 7" may include resource allocation information for transmission of the SRS through a second antenna (for example, the second antenna 600b of FIG. 6) in a 7^{th} slot in every 20 slots. For example, "periodicityAndOffset-p sl20: 13" may include resource allocation information for transmission of the SRS through a third antenna (for example, the third antenna 600c of FIG. 6) in a 13^{rd} slot in every 20 slots. For example, "periodicityAndOffset-p sl20: 3" may include resource allocation information for transmission of the SRS through a fourth antenna (for example, the fourth antenna 600d of FIG. 6) in a 3^{rd} slot in every 20 slots.

According to various embodiments, the electronic device (for example, the processor 120 or 500) may identify whether an error generation period of data received from the first node of the first network at least partially overlaps a transmission period of the reference signal related to the second network in operation 807.

According to various embodiments, when the error generation period of data received from the first node of the first network does not overlap the transmission period of the reference signal related to the second network (for example, 'No' of operation 807), the electronic device (for example, the processor 120 or 500) may end an embodiment for detecting an error by the reference signal of the second network. According to an embodiment, when the error generation period of data received from the first node of the first network does not overlap the transmission period of the reference signal related to the second network, the processor 500 may determine that interference by the reference signal of the second network is not generated.

According to various embodiments, when the error generation period of data received from the first node of the first network at least partially overlaps the transmission period of the reference signal related to the second network (for example, 'Yes' of operation 807), the electronic device (for example, the processor 120 or 500) may determine that an error is generated in data received from the first node of the first network due to the interference by the reference signal of the second network in operation 809. According to an embodiment, when it is determined that interference by the reference signal of the second network is generated, the processor 500 may run an avoidance algorithm related to the reference signal of the second network like in operation 707 of FIG. 7.

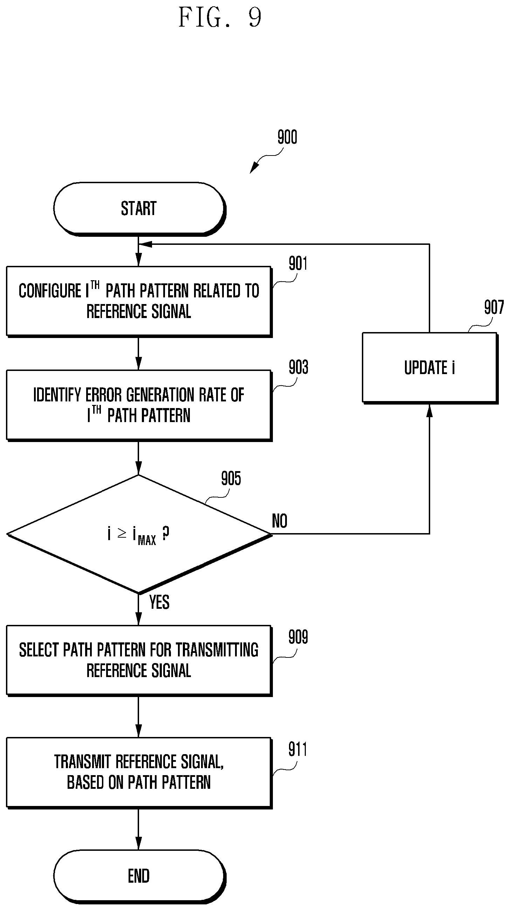

FIG. 9 is a flowchart 900 illustrating a process in which the electronic device adjusts a path for transmitting the reference signal according to various embodiments. According to an embodiment, operations of FIG. 9 may be the detailed operation of operation 707 of FIG. 7. In the following embodiment, operations may be sequentially performed but the sequential performance is not necessary. For example, the order of operations may be changed, and at least two operations may be performed in parallel. For example, the electronic device of FIG. 9 may be the electronic device 101 of FIG. 1, 2, 3, 4, 5, or 6.

Referring to FIG. 9, according to various embodiments, when an event related to the reference signal of the second network is generated (for example, 'Yes' of operation 705 of FIG. 7), the electronic device (for example, the processor 120 of FIG. 1 or the processor 500 of FIG. 5) may configure an i^{th} path pattern among a plurality of path patterns related to the reference signal as a path pattern for transmitting the reference signal in operation 901. According to an embodiment, when an error is detected in a signal (or data) received from the first node through the first network due to interference by the reference signal of the second network, the processor 500 may identify a plurality of path patterns stored in the memory 520 to run an avoidance algorithm related to the reference signal. The processor 500 may select the i^{th} path pattern on the basis of priorities of the plurality of path patterns. For example, i may include an index of a path pattern configured on the basis of the priorities of the path patterns. For example, the priorities of the plurality of path patterns may be configured on the basis of the frequency band of the first network used by the electronic device 101 to communicate with the first node. For example, the path pattern may include the sequence of paths for transmitting the reference signal by the electronic device 101.

According to various embodiments, the electronic device (for example, the processor 120 or 500) may identify an error generation rate of data received from the first node of the first network for the case in which the reference signal of the second network is transmitted on the basis of the i^{th} path pattern in operation 903. According to an embodiment, when a first path pattern is configured, the processor 500 may control the wireless communication circuit 510 to transmit the reference signal through the first antenna 600a (or the first RFFE 610a) at the first time point and the second time point on the basis of the first path pattern. The processor 500 may control the wireless communication circuit 510 to transmit the reference signal through the third antenna 600c (or the third RFFE 610c) at the third time point on the basis of the first path pattern. The processor 500 may control the wireless communication circuit 510 to transmit the reference signal through the fourth antenna 600d (or the fourth RFFE 610d) at the fourth time point on the basis of the first path pattern. For example, when transmission of the reference signal through the second antenna 600b (or the second RFFE 610b) is limited on the basis of the first path pattern, the processor 500 may identify an error generation rate of the data received from the first node of the first network.

According to an embodiment, when a second path pattern is configured, the processor 500 may control the wireless communication circuit 510 to transmit the reference signal through the first antenna 600a (or the first RFFE 610a) at the first time point and the second time point on the basis of the second path pattern. The processor 500 may control the wireless communication circuit 510 to transmit the reference signal through the second antenna 600b (or the second RFFE 610b) at the third time point on the basis of the second path pattern. The processor 500 may control the wireless communication circuit 510 to transmit the reference signal through the fourth antenna 600d (or the fourth RFFE 610d) at the fourth time point on the basis of the second path pattern. For example, when transmission of the reference signal through the third antenna 600c (or the third RFFE 610c) is limited on the basis of the second path pattern, the processor 500 may identify an error generation rate of the data received from the first node of the first network.

According to an embodiment, when a third path pattern is configured, the processor 500 may control the wireless communication circuit 510 to transmit the reference signal through the first antenna 600a (or the first RFFE 610a) at the first time point and the second time point on the basis of a third path pattern. The processor 500 may control the wireless communication circuit 510 to transmit the reference signal through the second antenna 600b (or the second RFFE 610b) at the third time point on the basis of the third path pattern. The processor 500 may control the wireless communication circuit 510 to transmit the reference signal through the third antenna 600c (or the third RFFE 610c) at the fourth time point on the basis of the third path pattern. For example, when transmission of the reference signal through the fourth antenna 600d (or the fourth RFFE 610d) is limited on the basis of the third path pattern, the processor 500 may identify an error generation rate of the data received from the first node of the first network.

According to an embodiment, when a fourth path pattern is configured, the processor 500 may control the wireless communication circuit 510 to transmit the reference signal through the first antenna 600a (or the first RFFE 610a) at the first time point, the second time point, the third time point, and the fourth time point on the basis of the fourth path pattern. For example, when transmission of the reference signal through the second antenna 600b (or the second RFFE 610b), the third antenna 600c (or the third RFFE 610c), and the fourth antenna 600d (or the fourth RFFE 610d) is limited on the basis of the fourth path pattern, the processor 500 may identify the error generation rate of the data received from the first node of the first network.

According to various embodiments, the electronic device (for example, the processor 120 or 500) may identify whether error generation rates of all path patterns are detected in operation 905. According to an embodiment, when the error generation rate of the data received from the first node is identified for the case in which the reference signal is transmitted on the basis of the i^{th} path pattern, the processor 500 may identify whether an index (i) of the path pattern for which the error generation rate is detected is larger than or equal to a maximum value (i_{MAX}) in order to identify whether the error generation rates for all path patterns are detected (for example, i ≥ i_{MAX}).

According to various embodiments, when error generation rates of all path patterns are not detected (for example, 'No' of operation 905), the electronic device (for example, the processor 120 or 500) may update the index (i) of the path pattern (for example, i++) in operation 907. According to an embodiment, when the index (i) of the path pattern for which the error generation rate is detected is smaller than the maximum value (i_{MAX}), the processor 500 may determine that a path pattern for which the error generation rate is not detected exists. The processor 500 may update the index (i) of the path pattern in order to detect the error generation rate of the path pattern for which the error generation rate is not detected (for example, i++). According to an embodiment, the processor 500 may configure the path pattern for transmitting the reference signal as the updated i^{th} path pattern (for example, operation 901). The processor 500 may identify the error generation rate of the data received from the first node of the first network for the case in which the reference signal of the second network is transmitted on the basis of the updated i^{th} path pattern (for example, operation 903).

According to various embodiments, when error generation rates of all path patterns are detected (for example, 'Yes' of operation 905), the electronic device (for example, the processor 120 or 500) may compare error generation rates of the path patterns and select a path pattern for transmitting the reference signal to the second network in operation 909. According to an embodiment, when it is determined that an error is generated in data received from the first node of the first network due to interference by the reference signal of the second network, the processor 500 may identify the error generation rate in the state in which transmission of the reference signal of at least one path is limited on the basis of the path pattern, as shown in [Table 3]. For example, the processor 500 may select a path pattern having the lowest error generation rate among a plurality path patterns as the path pattern for transmitting the reference signal of the second network.

**[Table 3]**

| Path pattern | DL(Mbps) |
|---|---|
| Basic pattern (RX0, RX1, RX2, RX3) | 550 |
| First path pattern (RX0, RX0, RX2, RX3) | 642 |
| Second path pattern (RX0, RX1, RX0, RX3) | 548 |
| Third path pattern (RX0, RX1, RX2, RX0) | 537 |
| Fourth path pattern (RX0, RX0, RX0, RX0) | 680 |

For example, in [Table 3], RX0 may indicate the first antenna 600a (or the first RFFE 610a), RX1 may indicate the second antenna 600b (or the second RFFE 610b), RX2 may indicate the third antenna 600c (or the third RFFE 610c), and RX3 may indicate the fourth antenna 600d (or the fourth RFFE 610d). For example, the processor 500 may determine that the error generation rate of the fourth path pattern having the highest throughput of the electronic device 101 among a plurality of path patterns (for example, the first path pattern to the fourth path pattern) is the lowest. Accordingly, the processor 500 may select the fourth path pattern as the path pattern for transmitting the reference signal of the second network.

According to various embodiments, the electronic device (for example, the processor 120 or 500) may transmit the reference signal through the second network on the basis of the path pattern selected to transmit the reference signal to the second network in operation 911.

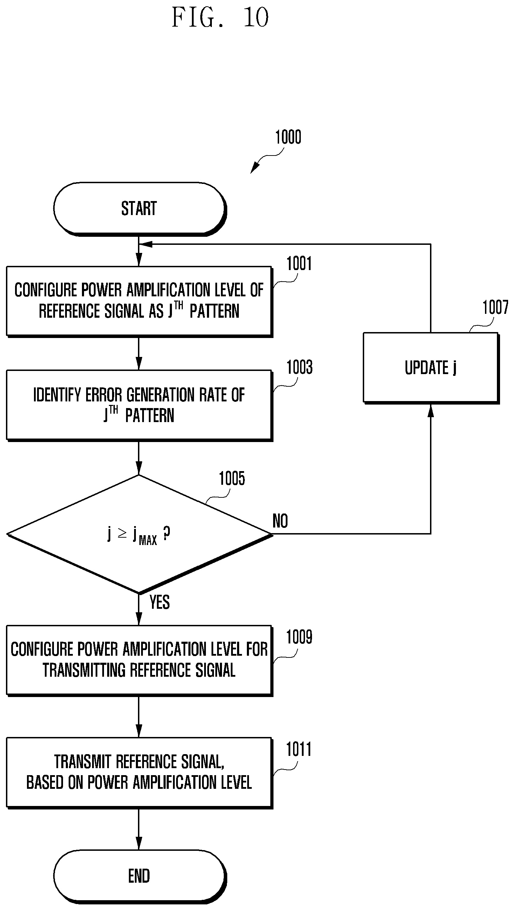

FIG. 10 is a flowchart 1000 illustrating a process in which the electronic device adjusts a power amplification level for transmitting the reference signal according to various embodiments. According to an embodiment, operations of FIG. 10 may be the detailed operation of operation 707 of FIG. 7. In the following embodiment, operations may be sequentially performed but the sequential performance is not necessary. For example, the order of operations may be changed, and at least two operations may be performed in parallel. For example, the electronic device of FIG. 10 may be the electronic device 101 of FIG. 1, 2, 3, 4, 5, or 6.

Referring to FIG. 10, according to various embodiments, when an event related to the reference signal of the second network is generated (for example, 'Yes' of operation 705 of FIG. 7), the electronic device (for example, the processor 120 of FIG. 1 or the processor 500 of FIG. 5) may configure an i^{th} pattern among patterns of a plurality of power amplification levels related to the reference signal as a power amplification level of each path for transmitting the reference signal in operation 1001. According to an embodiment, when an error is detected in a signal (or data) received from the first node through the first network due to interference by the reference signal of the second network, the processor 500 may identify patterns of a plurality of power amplification levels stored in the memory 520 in order to run an avoidance algorithm related to the reference signal. The processor 500 may select a j^{th} path pattern on the basis of priorities of the patterns of the plurality of power amplification levels. For example, j may include an index of the power amplification level pattern configured on the basis of the priorities of the patterns of the power amplification levels. For example, the priorities of the patterns of the plurality of power amplification levels may be configured on the basis of a frequency band of the first network used by the electronic device 101 to communicate with the first node. For example, the pattern of the power amplification level may include information related to the power amplification level for transmitting the reference signal by the electronic device 101 through each antenna (for example, 600a, 600b, 600c, or 600d of FIG. 6) (or the RFFE 610a, 610b, 610c, or 610d of FIG. 6).

According to various embodiments, the electronic device (for example, the processor 120 or 500) may identify an error generation rate of data received from the first node of the first network for the case in which the reference signal of the second network is transmitted on the basis of the pattern of the j^{th} power amplification level in operation 1003. According to an embodiment, when a pattern of a first power amplification level is configured, the processor 500 may control the wireless communication circuit 510 to configure, as a first value (for example, about 0 dB), the power amplification level of the reference signal to be transmitted through the first antenna 600a (or the first RFFE 610a) at the first time point on the basis of the pattern of the first power amplification level. The processor 500 may control the wireless communication circuit 510 to configure, as a second value (for example, about -5 dB), the power amplification level of the reference signal to be transmitted through the second antenna 600b (or the second RFFE 610b) at the second time point on the basis of the pattern of the first power amplification level. The processor 500 may control the wireless communication circuit 510 to configure, as a third value (for example, about 3 dB), the power amplification level of the reference signal to be transmitted through the third antenna 600c (or the third RFFE 610c) and the fourth antenna 600d (or the fourth RFFE 610d) at the third time point and the fourth time point on the basis of the pattern of the first power amplification level.

According to an embodiment, when a pattern of a second power amplification level is configured, the processor 500 may control the wireless communication circuit 510 to configure, as a first value (for example, about 0 dB), the power amplification level of the reference signal to be transmitted through the first antenna 600a (or the first RFFE 610a) at the first time point on the basis of the pattern of the second power amplification level. The processor 500 may control the wireless communication circuit 510 to configure, as a third value (for example, about 3 dB), the power amplification level of the reference signal to be transmitted through the second antenna 600b (or the second RFFE 610b) and the fourth antenna 600d (or the fourth RFFE 610d) at the second time point and the fourth time point on the basis of the pattern of the second power amplification level. The processor 500 may control the wireless communication circuit 510 to configure, as a second value (for example, about -5 dB), the power amplification level of the reference signal to be transmitted through the third antenna 600c (or the third RFFE 610c) at the third time point on the basis of the pattern of the second power amplification level.

According to an embodiment, when a pattern of a third power amplification level is configured, the processor 500 may control the wireless communication circuit 510 to configure, as a first value (for example, about 0 dB), the power amplification level of the reference signal to be transmitted through the first antenna 600a (or the first RFFE 610a) at the first time point on the basis of the pattern of the third power amplification level. The processor 500 may control the wireless communication circuit 510 to configure, as a third value (for example, about 3 dB), the power amplification level of the reference signal to be transmitted through the second antenna 600b (or the second RFFE 610b) and the third antenna 600c (or the third RFFE 610c) at the second time point and the third time point on the basis of the pattern of the third power amplification level. The processor 500 may control the wireless communication circuit 510 to configure, as a second value (for example, about -5 dB), the power amplification level of the reference signal to be transmitted through the fourth antenna 600d (or the fourth RFFE 610d) at the fourth time point on the basis of the pattern of the third power amplification level.

According to an embodiment, when a pattern of a fourth power amplification level is configured, the processor 500 may control the wireless communication circuit 510 to configure, as a first value (for example, about 0 dB), the power amplification level of the reference signal to be transmitted through the first antenna 600a (or the first RFFE 610a) at the first time point on the basis of the pattern of the fourth power amplification level. The processor 500 may control the wireless communication circuit 510 to configure, as a second value (for example, about -5 dB), the power amplification level of the reference signal to be transmitted through the second antenna 600b (or the second RFFE 610b), the third antenna 600c (or the third RFFE 610c), and the fourth antenna 600d (or the fourth RFFE 610d) at the third time point and the fourth time point on the basis of the pattern of the fourth power amplification level.

According to various embodiments, the electronic device (for example, the processor 120 or 500) may identify whether error generation rates of patterns of all power amplification levels are detected in operation 1005. According to an embodiment, when the error generation rate of the data received from the first node is identified for the case in which the reference signal is transmitted on the basis of the j^{th} power amplification pattern, the processor 500 may identify whether an index (j) of the power amplification pattern for which the error generation rate is detected is larger than or equal to a maximum value (j_{MAX}) in order to identify whether the error generation rates for all path patterns are detected (for example, j ≥ j_{MAX}).

According to various embodiments, when error generation rates of the patterns of all power amplification levels are not detected (for example, 'No' of operation 1005), the electronic device (for example, the processor 120 or 500) may update the index (j) of the pattern of the power amplification level in operation 1007 (for example, j++). According to an embodiment, when the index (j) of the power amplification pattern for which the error generation rate is detected is smaller than the maximum value (j_{MAX}) (for example, j < j_{MAX}), the processor 500 may determine that a power amplification pattern for which the error generation rate is not detected exists. The processor 500 may update the index (j) of the pattern of the power amplification level in order to detect the error generation rate of the pattern of the power amplification level for which the error generation rate is not detected (for example, j++). According to an embodiment, the processor 500 may configure the pattern of the updated j^{th} power amplification level as the pattern of the power amplification level for transmitting the reference signal (for example, operation 1001). The processor 500 may identify the error generation rate of the data received from the first node of the first network for the case in which the reference signal of the second network is transmitted on the basis of the pattern of the updated j^{th} power amplification level (for example, operation 1003).

According to various embodiments, when error generation rates of patterns of all power amplification levels are detected (for example, 'Yes' of operation 1005), the electronic device (for example, the processor 120 or 500) may compare the error generation rates of the patterns of the power amplification levels and select a pattern of the power amplification level for transmitting the reference signal to the second network in operation 1009. According to an embodiment, the processor 500 may select the pattern of the power amplification level having the lowest error generation rate among the patterns of the plurality of power amplification levels as the pattern of the power amplification level for transmitting the reference signal of the second network.

According to various embodiments, the electronic device (for example, the processor 120 or 500) may transmit the reference signal through the second network on the basis of the pattern of the power amplification level selected to transmit the reference signal to the second network in operation 1011.

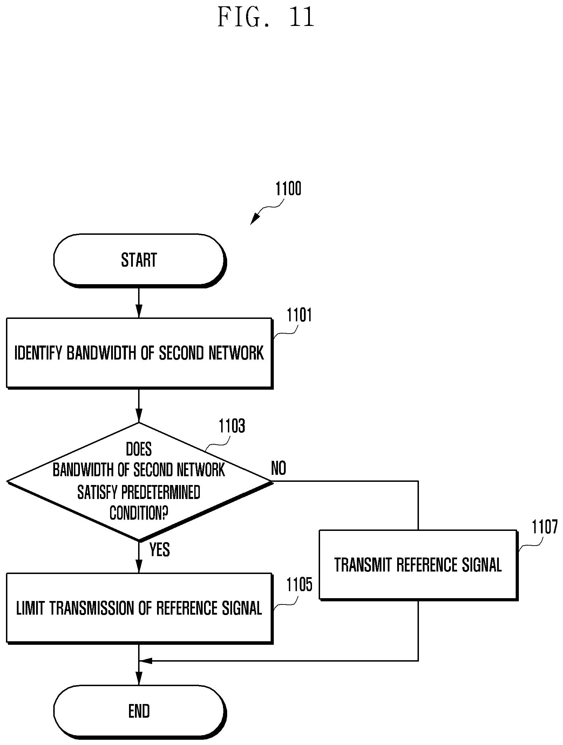

FIG. 11 is a flowchart 1100 illustrating a process in which the electronic device determines whether to transmit the reference signal according to various embodiments. According to an embodiment, operations of FIG. 11 may be the detailed operation of operation 707 of FIG. 7. In the following embodiment, operations may be sequentially performed but the sequential performance is not necessary. For example, the order of operations may be changed, and at least two operations may be performed in parallel. For example, the electronic device of FIG. 11 may be the electronic device 101 of FIG. 1, 2, 3, 4, 5, or 6.

Referring to FIG. 11, according to various embodiments, when an event related to the reference signal of the second network is generated (for example, 'Yes' of operation 705 of FIG. 7), the electronic device (for example, the processor 120 of FIG. 1 or the processor 500 of FIG. 5) may identify a bandwidth of the second network in operation 1101. According to an embodiment, when an error is detected in a signal (or data) received from the first node through the first network due to interference by the reference signal of the second network, the processor 500 may identify a bandwidth allocated by the first node (or the second node) to transmit and/or receive data through the second network.

According to various embodiments, the electronic device (for example, the processor 120 or 500) may identify whether the bandwidth of the second network satisfies a predetermined second condition in operation 1103. According to an embodiment, the processor 500 may identify a ratio of the bandwidth of the second network to the entire bandwidth of the electronic device 101. The processor 500 may identify whether the ratio of the bandwidth of the second network satisfies the predetermined second condition. For example, a state satisfying the predetermined second condition may include a state in which the ratio of the bandwidth of the second network is equal to or lower than a reference ratio (for example, about 40%). For example, a state which does not satisfy the predetermined second condition may include a state in which the ratio of the bandwidth of the second network exceeds the reference ratio (for example, about 40%). For example, the bandwidth of the second network may include a bandwidth allocated by the first node (or the second node) to transmit and/or receive data through the second network. For example, the entire bandwidth of the electronic device 101 is a bandwidth which can be used by the electronic device 101 to transmit and/or receive data through the first network and/or the second network, and may be determined as a sum of the bandwidth (for example, the bandwidth of the first network) allocated by the first node to transmit and/or receive data through the first network and the bandwidth of the second network.

According to various embodiments, when the bandwidth of the second network satisfies the predetermined second condition (for example, 'Yes' of operation 1103), the electronic device (for example, the processor 120 or 500) may limit transmission of the reference signal through the second network in operation 1105. According to an embodiment, when the ratio of the bandwidth of the second network satisfies the predetermined second condition, the processor 500 may determine that loss of the first network by the reference signal of the second network is relatively larger than a gain of the second network which can be acquired through transmission of the reference signal of the second network. Accordingly, the processor 500 may control the wireless communication circuit 510 to limit transmission of the reference signal of the second network. For example, the processor 500 may control the first switch 614 and/or the second switch 640 to limit transmission of the reference signal of the second network. For example, when transmission of the reference signal of the second network is limited, the first switch 614 may maintain the connection between the diplexer 611 and the second band pass filter 615. For example, when transmission of the reference signal of the second network is limited, the second switch 640 may block the connection between the power amplifier 630 and the plurality of antennas 600a, 600b, 600c, and 600d (or the plurality of RFFEs 610a, 610b, 610c, and 610d).

According to various embodiments, when the bandwidth of the second network does not satisfy the predetermined second condition (for example, 'No' of operation 1103), the electronic device (for example, the processor 120 or 500) may transmit the reference signal through the second network in operation 1107.

According to an embodiment, when the ratio of the bandwidth of the second network does not satisfy the predetermined second condition, the processor 500 may determine that the gain of the second network which can be acquired through transmission of the reference signal of the second network is relatively larger than loss of the first network by the reference signal of the second network. Accordingly, the processor 500 may control the wireless communication circuit 510 to transmit the reference signal of the second network.

According to various embodiments, the electronic device 101 may improve throughput of the first network by limiting transmission of the reference signal of the second network on the basis of the ratio of the bandwidth of the second network to the entire system bandwidth of the electronic device 101. According to an embodiment, when the ratio of the bandwidth of the second network to the entire system bandwidth of the electronic device 101 satisfies the predetermined second condition, the electronic device 101 may improve the throughput of the electronic device 101 on the basis of the limit of the transmission of the reference signal of the second network as shown in [Table 4]. When the ratio of the bandwidth of the second network to the entire system bandwidth of the electronic device 101 does not satisfy the predetermined second condition as shown in [Table 4], the electronic device 101 may improve the throughput of the electronic device 101 on the basis of transmission of the reference signal of the second network.

**[Table 4]**

| Field information | | DL(Mbps) |
|---|---|---|
| Bandwidth of first network (60%) Bandwidth of second network (40%) | SRS 1T4R ON | 592 |
| | SRS 1T4R OFF | 966 |
| Bandwidth of first network (30%) | SRS 1T4R ON | 621 |
| Bandwidth of second network (70%) | SRS 1T4R OFF | 689 |

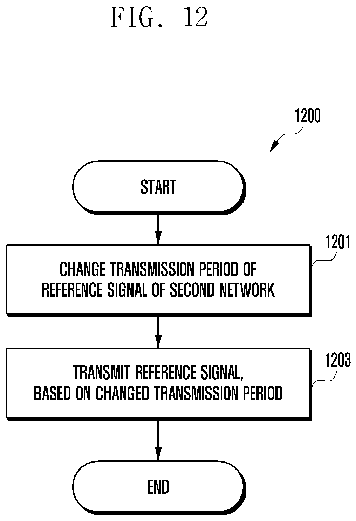

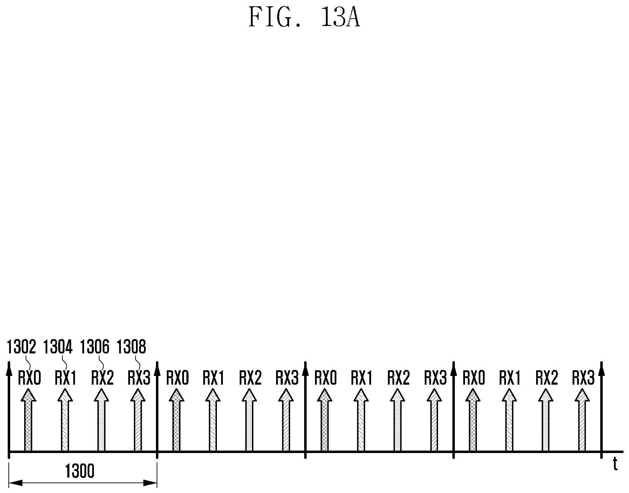

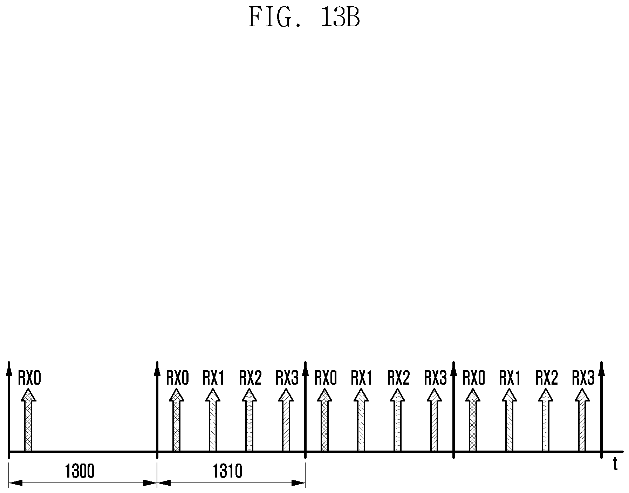

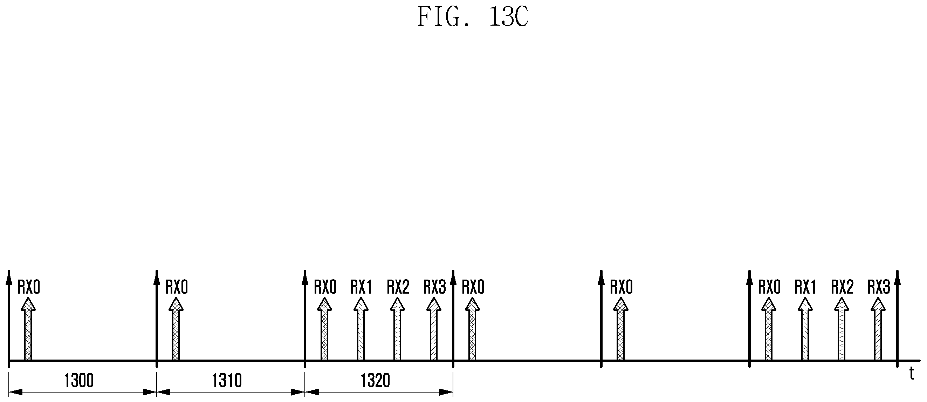

FIG. 12 is a flowchart 1200 illustrating a process in which the electronic device adjusts a transmission period of the reference signal according to various embodiments. According to an embodiment, operations of FIG. 12 may be the detailed operation of operation 707 of FIG. 7. In the following embodiment, operations may be sequentially performed but the sequential performance is not necessary. For example, the order of operations may be changed, and at least two operations may be performed in parallel. For example, the electronic device of FIG. 12 may be the electronic device 101 of FIG. 1, 2, 3, 4, 5, or 6. At least some of FIG. 12 may refer to FIGs. 13A, 13B, and 13C. FIG. 13A illustrates an example of a transmission period of the reference signal of the electronic device according to various embodiments. FIG. 13B illustrates an example of adjusting the transmission period of the reference signal by the electronic device according to various embodiments. FIG. 13C illustrates another example of adjusting the transmission period of the reference signal by the electronic device according to various embodiments.

Referring to FIG. 12, according to various embodiments, when an event related to the reference signal of the second network is generated (for example, 'Yes' of operation 705 of FIG. 7), the electronic device (for example, the processor 120 of FIG. 1 or the processor 500 of FIG. 5) may change a period for transmitting the reference signal through the second network in operation 1201. According to an embodiment, the processor 500 may control the wireless communication circuit 510 to periodically transmit the reference signal on the basis of resource allocation information for transmission of the reference signal of the second network as illustrated in FIG. 13A. For example, when a first time point 1302 arrives within a first transmission section 1300 as illustrated in FIG. 13A, the wireless communication circuit 510 may transmit the reference signal through the first antenna 600a (or the first RFFE 610a). When a second time point 1304 arrives within the first transmission section 1300, the wireless communication circuit 510 may transmit the reference signal through the second antenna 600b (or the second RFFE 610b). When a third time point 1306 arrives within the first transmission section 1300, the wireless communication circuit 510 may transmit the reference signal through the third antenna 600c (or the RFFE 610c). When a fourth time point 1308 arrives within the first transmission section 1300, the wireless communication circuit 510 may transmit the reference signal through the fourth antenna 600d (or the fourth RFFE 610d). According to an embodiment, when an error is detected in a signal (or data) received from the first node through the first network due to interference by the reference signal of the second network, the processor 500 may control the wireless communication circuit 510 to change the period for transmitting the reference signal of the second network.

According to various embodiments, the electronic device (for example, the processor 120 or 500) may transmit the reference signal through the second network on the basis of the changed transmission period in operation 1203. According to an embodiment, the processor 600 may control the wireless communication circuit 510 to increase the transmission period of the reference signal of the second network by a first reference interval (for example, two times) as illustrated in FIG. 13B. For example, when the first time point 1302 arrives within the first transmission section 1300 as illustrated in FIG. 13B, the wireless communication circuit 510 may transmit the reference signal through the first antenna 600a (or the first RFFE 610a). The wireless communication circuit 510 may limit transmission of the reference signal at the second time point 1304, the third time point 1306, and the fourth time point 1308 within the first transmission section 1300 on the basis of the changed transmission period of the reference signal. For example, when the first time point arrives within a second transmission section 1310 as illustrated in FIG. 13B, the wireless communication circuit 510 may transmit the reference signal through the first antenna 600a (or the first RFFE 610a). When the second time point arrives within the second transmission section 1310, the wireless communication circuit 510 may transmit the reference signal through the second antenna 600b (or the second RFFE 610b). When the third time point arrives within the second transmission section 1310, the wireless communication circuit 510 may transmit the reference signal through the third antenna 600c (or the third RFFE 610c). When the fourth time point arrives within the second transmission section 1310, the wireless communication circuit 510 may transmit the reference signal through the fourth antenna 600d (or the fourth RFFE 610d).

According to an embodiment, the processor 600 may control the wireless communication circuit 510 to increase the transmission period of the reference signal of the second network by a second reference interval (for example, three times) as illustrated in FIG. 13B. For example, when the first time point 1302 arrives within the first transmission section 1300 and the second transmission section 1310 as illustrated in FIG. 13C, the wireless communication circuit 510 may transmit the reference signal through the first antenna 600a (or the first RFFE 610a). The wireless communication circuit 510 may limit transmission of the reference signal at the second time point, the third time point, and the fourth time point within the first transmission section 1300 and the second transmission section 1310 on the basis of the changed transmission period of the reference signal. For example, when the transmission time point of the reference signal arrives within a third transmission section 1320 as illustrated in FIG. 13C, the wireless communication circuit 510 may transmit the reference signal through each antenna (for example, 600a, 600b, 600c, or 600d of FIG. 6) (or the RFFE 610a, 610b, 610c, or 610d).

According to various embodiments, the electronic device 101 may improve throughput of the first network by changing the transmission period of the reference signal of the second network. According to an embodiment, the throughput of the first network may be improved on the basis of the change in the transmission period of the reference signal of the second network as shown in [Table 5].

**[Table 5]**

| SRS periodicity(ms) | Throughput (%) | |
|---|---|---|
| | B3 | B7 |
| 10 | 79.9 | 79.9 |
| 20 | 89.9 | 89.9 |
| 40 | 94.98 | 94.98 |
| 80 | 97.5 | 97.5 |
| 160 | 98.8 | 98.8 |
| 320 | 97.4 | 97.4 |

For example, when the transmission period (for example, 10 ms) of the reference signal of the second network increases by a reference interval, the throughput of the first network may be improved in a first frequency band (for example, B3) and a second frequency band (for example, B7).

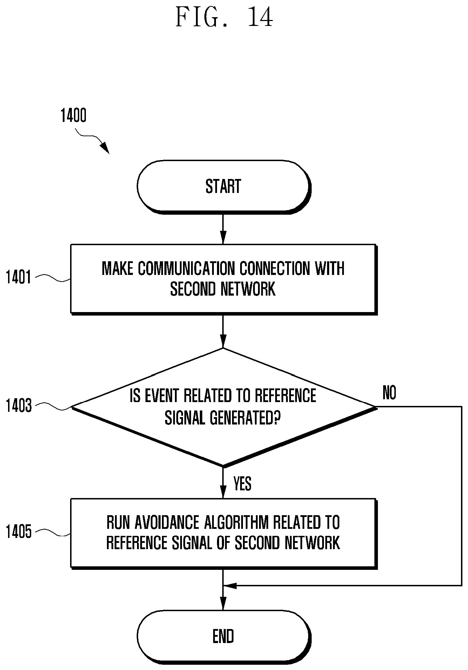

FIG. 14 is a flowchart 1400 illustrating a process in which the electronic device applies an avoidance algorithm of the reference signal according to various embodiments. In the following embodiment, operations may be sequentially performed but the sequential performance is not necessary. For example, the order of operations may be changed, and at least two operations may be performed in parallel. For example, the electronic device of FIG. 14 may be the electronic device 101 of FIG. 1, 2, 3, 4, 5, or 6.

Referring to FIG. 14, according to various embodiments, the electronic device (for example, the processor 120 of FIG. 1 or the processor 500 of FIG. 5) may make a communication connection with the second node (for example, the second node 420 of FIG. 4) of the second network in operation 1401. According to an embodiment, the first communication circuit 512 may make a radio resource control (RRC) connection with the first node (for example, the first node 410 of FIG. 4) for supporting the first network. The second communication circuit 514 may communicate with the second node (for example, the second node 420 of FIG. 4) supporting the second network on the basis of control information related to the connection of a second network provided from the first communication circuit 512. According to an embodiment, the second communication circuit 514 may make a radio resource control (RRC) connection with the second node supporting the second network. The second communication circuit 514 may make a communication connection with the second node supporting the second network on the basis of control information related to the connection of the second network acquired through the RRC connection with the second node.

According to various embodiments, the electronic device (for example, the processor 120 or 500) may identify whether an event related to the reference signal of the second network is generated on the basis of operation state information of the electronic device in operation 1403. According to an embodiment, when an element physically adjacent to the wireless communication circuit 510 (or the second communication circuit 514) is operated among the elements included in the electronic device 101, the processor 500 may determine that the event related to the reference signal of the second network is generated. For example, when a camera (not shown) physically adjacent to the wireless communication circuit 510 (or the second communication circuit 514) is operated in the state in which the electronic device 101 accesses the second node of the second network through the wireless communication circuit 510, the processor 500 may determine that the event related to the reference signal of the second network is generated. For example, when WLAN communication is performed in the state in which the electronic device 101 accesses the second node of the second network through the wireless communication circuit 510, the processor 500 may determine that the event related to the reference signal of the second network is generated. For example, when the electronic device accesses the first node of the first network through the first communication circuit 512 physically adjacent to the second communication circuit 514 in the state in which the electronic device accesses the second node of the second network through the second communication circuit 514, the processor 500 may determine that the event related to the reference signal of the second network is generated. For example, the processor 500 may determine that the event related to the reference signal of the second network is generated through operations 801 to 809 of FIG. 8.

According to various embodiments, when it is determined that the event related to the reference signal of the second network is not generated ('No' of operation 1403), the electronic device (for example, the processor 120 or 500) may end an embodiment for running an avoidance algorithm related to the reference signal.

According to various embodiments, when it is determined that the event related to the reference signal of the second network is generated (for example, 'Yes' of operation 1403), the electronic device (for example, the processor 120 or 500) may run the avoidance algorithm related to the reference signal of the second network. According to an embodiment, when the avoidance algorithm related to the reference signal of the second network is run, the processor 500 may limit transmission of the reference signal for at least one path of a plurality of paths for transmitting the reference signal of the second network like in operations 901 to 911 of FIG. 9. According to an embodiment, when the avoidance algorithm related to the reference signal of the second network is run, the processor 500 may adjust a power amplification level related to transmission of the reference signal for at least one path of a plurality of paths for transmitting the reference signal of the second network like in operations 1001 to 1011 of FIG. 10. According to an embodiment, when the avoidance algorithm related to the reference signal of the second network is run, the processor 500 may adjust a transmission period of the reference signal of the second network like in operations 1201 to 1203 of FIG. 12.

According to the invention, a method of operating an electronic device (for example, the electronic device 101 of FIG. 1, 2, 3, 4, 5, or 6) includes an operation of performing communication of a first network with a first node, an operation of identifying whether an event related to transmission control of a reference signal of the first network is generated, based on operation state information of the electronic device, an operation of, in case that the event related to the transmission control of the reference signal is generated, limiting transmission of the reference signal for at least one path of a plurality of paths corresponding to the plurality of antennas included in the electronic device, and an operation of transmitting the reference signal of the first network through remaining at least one path except for at least one path for limiting the transmission of the reference signal among the plurality of paths.

According to various embodiments, the method may further include an operation of performing communication of a second network with a second node and the operation of performing the communication of the first network may include an operation of performing the communication of the first network with the first node, based on control information received from the second node through the communication of the second network.

According to the invention, the operation of identifying whether the event is generated includes an operation of, in case that the communication of the first network is performed with the first node and the communication of the second network is performed with the second node, identifying whether an error related to the communication of the second network is generated and an operation of, in case that the error related to the communication of the second network is generated by the reference signal of the first network, determining that the event related to the transmission control of the reference signal is generated.

According to various embodiments, the operation of determining that the event is generated may include an operation of, in case that the error related to the communication of the second network is detected, identifying an error generation period and an operation of, in case that a generation period of the error related to the communication of the second network at least partially overlaps a transmission period of the reference signal of the first network, determining that the event related to the transmission control of the reference signal is generated.

According to various embodiments, the transmission period of the reference signal of the first network may be identified, based on a radio resource control (RRC) control signal received from the second node.

According to various embodiments, the operation of limiting the transmission of the reference signal may include an operation of, in case that that the event related to transmission control of the reference signal is generated, identifying an error generation rate of each of a plurality of predefined path patterns, an operation of selecting one path pattern from among the plurality of path patterns, based on the error generation rate, and an operation of identifying the at least one path for limiting transmission of the reference signal among the plurality of paths, based on the selected path pattern.

According to various embodiments, the operation of transmitting the reference signal of the first network may include an operation of, in case that a transmission time point corresponding to each of the remaining at least one path among the plurality of paths arrives, transmitting the reference signal through a path corresponding to the transmission time point.

According to various embodiments, the method may further include an operation of, in case that a transmission time point corresponding to the at least one path for limiting the transmission of the reference signal among the plurality of paths arrives, transmitting the reference signal through a reference path among the plurality of paths.

According to various embodiments, the operation of identifying whether the event is generated may include an operation of, in case that at least one element physically adjacent to the first communication circuit among elements of the electronic device is operated, determining that the event related to the transmission control of the reference signal is generated.

According to various embodiments, the reference signal of the first network may include a sounding reference signal (SRS).

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. Therefore, the scope of various embodiments of the disclosure should be construed to include, in addition to the embodiments disclosed herein, all changes and modifications derived on the basis of the technical idea of various embodiments of the disclosure.

## Claims

1. An electronic device (101) comprising:
a plurality of antennas (600a, 600b, 600c, 600d);
a communication circuitry (510);
at least one processor (500) operatively connected to the communication circuitry; and
memory (520) storing instructions which, when executed by the at least one processor (500), cause the electronic device (101) to:
perform, via the communication circuitry (510), communication of a first network with a first node;
perform, via the communication circuitry (510), communication of a second network with a second node, based on control information received from the first node through the communication of the first network;
identify whether an error related to the communication of the first network is generated; and
in case that the error related to the communication of the first network is generated by a reference signal of the second network, limit transmission of the reference signal for at least one path of a plurality of paths corresponding to the plurality of antennas and transmit the reference signal of the second network through remaining at least one path of the plurality of paths except for the at least one path for limiting the transmission of the reference signal.

2. The electronic device of claim 1, wherein the instructions which, when executed by the at least one processor (500), cause the electronic device (101) to:
in case that the error related to the communication of the first network is detected, identify an error generation period; and
in case that the generation period of the error related to the communication of the first network at least partially overlaps a transmission period of the reference signal of the second network, determine that the error related to the communication of the first network is generated by the reference signal of the second network.

3. The electronic device of claim 2, wherein the transmission period of the reference signal of the second network is identified, based on a radio resource control, RRC, control signal received from the first node.

4. The electronic device of claim 1, wherein the instructions which, when executed by the at least one processor (500), cause the electronic device (101) to:
in case that the error related to the communication of the first network is generated by a reference signal of the second network, identify an error generation rate of each of a plurality of predefined path patterns;
select one path pattern from among the plurality of path patterns, based on the error generation rate;
identify the at least one path for limiting transmission of the reference signal among the plurality of paths, based on the selected path pattern; and
transmit the reference signal of the second network through remaining at least one path except for the at least one path among the plurality of paths.

5. The electronic device of claim 4, wherein the instructions which, when executed by the at least one processor (500), cause the electronic device (101) to, in case that a transmission time point corresponding to each of the remaining at least one path arrives, transmit the reference signal through a path corresponding to the transmission time point.

6. The electronic device of claim 5, wherein the instructions which, when executed by the at least one processor (500), cause the electronic device (101) to, in case that a transmission time point corresponding to the at least one path for limiting the transmission of the reference signal among the plurality of paths arrives, transmit the reference signal through a reference path among the plurality of paths.

7. A method of operating an electronic device, the method comprising:
performing communication of a first network with a first node;
performing communication of a second network with a second node, based on control information received from the first node through the communication of the first network;
identifying whether an error related to the communication of the first network is generated;
in case that the error related to the communication of the first network is generated by a reference signal of the second network, limiting transmission of the reference signal for at least one path of a plurality of paths corresponding to the plurality of antennas included in the electronic device; and
transmitting the reference signal of the second network through remaining at least one path of the plurality of paths except for the at least one path for limiting the transmission of the reference signal among the plurality of paths.

8. The method of claim 7, further comprising:
in case that the error related to the communication of the first network is detected, identifying an error generation period; and
in case that a generation period of the error related to the communication of the first network at least partially overlaps a transmission period of the reference signal of the second network, determining that the event related to the transmission control of the reference signal is generated.

9. The method of claim 1, wherein the limiting of the transmission of the reference signal comprises:
in case that that the error related to the communication of the first network is generated by a reference signal of the second network, identifying an error generation rate of each of a plurality of predefined path patterns;
selecting one path pattern from among the plurality of path patterns, based on the error generation rate; and
identifying the at least one path for limiting transmission of the reference signal among the plurality of paths, based on the selected path pattern.

10. The method of claim 7, wherein the transmitting of the reference signal of the second network comprises:
in case that a transmission time point corresponding to each of the remaining at least one path among the plurality of paths arrives, transmitting the reference signal through a path corresponding to the transmission time point; and
in case that a transmission time point corresponding to the at least one path for limiting the transmission of the reference signal among the plurality of paths arrives, transmitting the reference signal through a reference path among the plurality of paths.

## Patentansprüche

1. Elektronische Vorrichtung (101), die Folgendes umfasst:
eine Vielzahl von Antennen (600a, 600b, 600c, 600d);
eine Kommunikationsschaltung (510);
mindestens einen Prozessor (500), der mit der Kommunikationsschaltung operativ verbunden ist; und
einen Speicher (520), der Anweisungen speichert, die, wenn sie von dem mindestens einen Prozessor (500) ausgeführt werden, die elektronische Vorrichtung (101) zu Folgendem veranlassen:
Ausführen einer Kommunikation eines ersten Netzwerks mit einem ersten Knoten über die Kommunikationsschaltung (510);
Ausführen einer Kommunikation eines zweiten Netzwerks mit einem zweiten Knoten über die Kommunikationsschaltung (510), basierend auf Steuerungsinformationen, die von dem ersten Knoten über die Kommunikation des ersten Netzwerks empfangen werden;
Identifizieren, ob ein Fehler in Bezug auf die Kommunikation des ersten Netzwerks erzeugt wird; und
falls der Fehler in Bezug auf die Kommunikation des ersten Netzwerks durch ein Referenzsignal des zweiten Netzwerks erzeugt wird, Begrenzen der Übertragung des Referenzsignals für mindestens einen Pfad einer Vielzahl von Pfaden, die der Vielzahl von Antennen entsprechen, und Übertragen des Referenzsignals des zweiten Netzwerks über mindestens einen verbleibenden Pfad der Vielzahl von Pfaden mit Ausnahme des mindestens einen Pfades zur Begrenzung der Übertragung des Referenzsignals.

2. Elektronische Vorrichtung nach Anspruch 1, wobei die Anweisungen, wenn sie von dem mindestens einen Prozessor (500) ausgeführt werden, die elektronische Vorrichtung (101) zu Folgendem veranlassen:
falls der Fehler in Bezug auf die Kommunikation des ersten Netzwerks erkannt wird, Identifizieren eines Fehlererzeugungszeitraums; und
falls der Erzeugungszeitraum des Fehlers in Bezug auf die Kommunikation des ersten Netzwerks zumindest teilweise mit einem Übertragungszeitraum des Referenzsignals des zweiten Netzwerks überlappt, Bestimmen, dass der Fehler in Bezug auf die Kommunikation des ersten Netzwerks durch das Referenzsignal des zweiten Netzwerks erzeugt wird.

3. Elektronische Vorrichtung nach Anspruch 2, wobei der Übertragungszeitraum des Referenzsignals des zweiten Netzwerks basierend auf einem Radio Resource Control(RRC)-Steuerungssignal identifiziert wird, das von dem ersten Knoten empfangen wird.

4. Elektronische Vorrichtung nach Anspruch 1, wobei die Anweisungen, wenn sie von dem mindestens einen Prozessor (500) ausgeführt werden, die elektronische Vorrichtung (101) zu Folgendem veranlassen:
falls der Fehler in Bezug auf die Kommunikation des ersten Netzwerks durch ein Referenzsignal des zweiten Netzwerks erzeugt wird, Identifizieren einer Fehlererzeugungsrate für jedes einer Vielzahl von vordefinierten Pfadmustern;
Auswählen eines Pfadmusters aus der Vielzahl von Pfadmustern basierend auf der Fehlererzeugungsrate;
Identifizieren des mindestens einen Pfades zur Begrenzung der Übertragung des Referenzsignals aus der Vielzahl von Pfaden basierend auf dem ausgewählten Pfadmuster; und
Übertragen des Referenzsignals des zweiten Netzwerks durch mindestens einen verbleibenden Pfad mit Ausnahme des mindestens einen Pfades aus der Vielzahl von Pfaden.

5. Elektronische Vorrichtung nach Anspruch 4, wobei die Anweisungen, wenn sie von dem mindestens einen Prozessor (500) ausgeführt werden, die elektronische Vorrichtung (101) veranlassen, falls ein Übertragungszeitpunkt eintrifft, der jedem des mindestens einen verbleibenden Pfades entspricht, das Referenzsignal über einen Pfad zu übertragen, der dem Übertragungszeitpunkt entspricht.

6. Elektronische Vorrichtung nach Anspruch 5, wobei die Anweisungen, wenn sie von dem mindestens einen Prozessor (500) ausgeführt werden, die elektronische Vorrichtung (101) veranlassen, falls ein Übertragungszeitpunkt eintrifft, der dem mindestens einen Pfad zur Begrenzung der Übertragung des Referenzsignals aus der Vielzahl von Pfaden entspricht, das Referenzsignal über einen Referenzpfad aus der Vielzahl von Pfaden zu übertragen.

7. Verfahren zum Betreiben einer elektronischen Vorrichtung, wobei das Verfahren Folgendes umfasst:
Ausführen der Kommunikation eines ersten Netzwerks mit einem ersten Knoten;
Ausführen der Kommunikation eines zweiten Netzwerks mit einem zweiten Knoten basierend auf Steuerungsinformationen, die von dem ersten Knoten über die Kommunikation des ersten Netzwerks empfangen werden;
Identifizieren, ob ein Fehler in Bezug auf die Kommunikation des ersten Netzwerks erzeugt wird;
falls der Fehler in Bezug auf die Kommunikation des ersten Netzwerks durch ein Referenzsignal des zweiten Netzwerks erzeugt wird, Begrenzen der Übertragung des Referenzsignals für mindestens einen Pfad einer Vielzahl von Pfaden, die der Vielzahl von Antennen entsprechen, die in der elektronischen Vorrichtung enthalten sind; und
Übertragen des Referenzsignals des zweiten Netzwerks über mindestens einen verbleibenden Pfad der Vielzahl von Pfaden mit Ausnahme des mindestens einen Pfades zur Begrenzung der Übertragung des Referenzsignals aus der Vielzahl von Pfaden.

8. Verfahren nach Anspruch 7, das ferner Folgendes umfasst:
falls der Fehler in Bezug auf die Kommunikation des ersten Netzwerks erkannt wird, Identifizieren eines Fehlererzeugungszeitraums; und
falls ein Erzeugungszeitraum des Fehlers in Bezug auf die Kommunikation des ersten Netzwerks zumindest teilweise mit einem Übertragungszeitraum des Referenzsignals des zweiten Netzwerks überlappt, Bestimmen, dass das Ereignis in Bezug auf die Übertragungssteuerung des Referenzsignals erzeugt wird.

9. Verfahren nach Anspruch 1, wobei das Begrenzen der Übertragung des Referenzsignals Folgendes umfasst:
falls der Fehler in Bezug auf die Kommunikation des ersten Netzwerks durch ein Referenzsignal des zweiten Netzwerks erzeugt wird, Identifizieren einer Fehlererzeugungsrate für jedes einer Vielzahl von vordefinierten Pfadmustern;
Auswählen eines Pfadmusters aus der Vielzahl von Pfadmustern basierend auf der Fehlererzeugungsrate; und
Identifizieren des mindestens einen Pfades zur Begrenzung der Übertragung des Referenzsignals aus der Vielzahl von Pfaden basierend auf dem ausgewählten Pfadmuster.

10. Verfahren nach Anspruch 7, wobei das Übertragen des Referenzsignals des zweiten Netzwerks Folgendes umfasst:
falls ein Übertragungszeitpunkt eintrifft, der jedem des mindestens einen verbleibenden Pfades aus der Vielzahl von Pfaden entspricht, Übertragen des Referenzsignals über einen Pfad, der dem Übertragungszeitpunkt entspricht; und
falls ein Übertragungszeitpunkt eintrifft, der dem mindestens einen Pfad zur Begrenzung der Übertragung des Referenzsignals aus der Vielzahl von Pfaden entspricht, Übertragen des Referenzsignals über einen Referenzpfad aus der Vielzahl von Pfaden.

## Revendications

1. Dispositif électronique (101) comprenant :
une pluralité d'antennes (600a, 600b, 600c, 600d) ;
un circuit de communication (510) ;
au moins un processeur (500) connecté de manière opérationnelle au circuit de communication ; et
une mémoire (520) stockant des instructions qui, lorsqu'elles sont exécutées par l'au moins un processeur (500), amènent le dispositif électronique (101) à :
effectuer, via le circuit de communication (510), une communication d'un premier réseau avec un premier nœud ;
effectuer, via le circuit de communication (510), une communication d'un deuxième réseau avec un deuxième nœud, sur la base d'informations de commande reçues du premier nœud à travers la communication du premier réseau ;
identifier si une erreur relative à la communication du premier réseau est générée ; et
dans le cas où l'erreur relative à la communication du premier réseau serait générée par un signal de référence du deuxième réseau, limiter la transmission du signal de référence pour au moins un trajet d'une pluralité de trajets correspondant à la pluralité d'antennes et transmettre le signal de référence du deuxième réseau à travers au moins un trajet restant de la pluralité de trajets à l'exception de l'au moins un trajet pour limiter la transmission du signal de référence.

2. Dispositif électronique selon la revendication 1, où les instructions qui, lorsqu'elles sont exécutées par l'au moins un processeur (500), amènent le dispositif électronique (101) à :
dans le cas où l'erreur relative à la communication du premier réseau serait détectée, identifier une période de génération d'erreurs ; et
dans le cas où la période de génération de l'erreur relative à la communication du premier réseau chevaucherait au moins partiellement une période de transmission du signal de référence du deuxième réseau, déterminer que l'erreur relative à la communication du premier réseau est générée par le signal de référence du deuxième réseau.

3. Dispositif électronique selon la revendication 2, où la période de transmission du signal de référence du deuxième réseau est identifiée, sur la base d'un signal de commande de contrôle de ressources radio, (RRC) reçu du premier nœud.

4. Dispositif électronique selon la revendication 1, où les instructions qui, lorsqu'elles sont exécutées par l'au moins un processeur (500), amènent le dispositif électronique (101) à :
dans le cas où l'erreur relative à la communication du premier réseau serait générée par un signal de référence du deuxième réseau, identifier un taux de génération d'erreurs de chacun d'une pluralité de motifs de trajet prédéfinis ;
sélectionner un motif de trajet parmi la pluralité de motifs de trajet, sur la base du taux de génération d'erreurs ;
identifier l'au moins un trajet pour limiter la transmission du signal de référence parmi la pluralité de trajets, sur la base du motif de trajet sélectionné ; et
transmettre le signal de référence du deuxième réseau à travers l'au moins un trajet restant à l'exception de l'au moins un trajet parmi la pluralité de trajets.

5. Dispositif électronique selon la revendication 4, où les instructions qui, lorsqu'elles sont exécutées par l'au moins un processeur (500), amènent le dispositif électronique (101) à, dans le cas où un point temporel de transmission correspondant à chacun de l'au moins un trajet restant arriverait, transmettre le signal de référence à travers un trajet correspondant au point temporel de transmission.

6. Dispositif électronique selon la revendication 5, où les instructions qui, lorsqu'elles sont exécutées par l'au moins un processeur (500), amènent le dispositif électronique (101) à, dans le cas où un point temporel de transmission correspondant à l'au moins un trajet pour limiter la transmission du signal de référence parmi la pluralité de trajets arriverait, transmettre le signal de référence à travers un trajet de référence parmi la pluralité de trajets.

7. Procédé de fonctionnement d'un dispositif électronique, le procédé comprenant :
effectuer une communication d'un premier réseau avec un premier nœud ;
effectuer une communication d'un deuxième réseau avec un deuxième nœud, sur la base d'informations de commande reçues du premier nœud à travers la communication du premier réseau ;
identifier si une erreur relative à la communication du premier réseau est générée ;
dans le cas où l'erreur relative à la communication du premier réseau serait générée par un signal de référence du deuxième réseau, limiter la transmission du signal de référence pour au moins un trajet d'une pluralité de trajets correspondant à la pluralité d'antennes incluses dans le dispositif électronique ; et
transmettre le signal de référence du deuxième réseau à travers au moins un trajet restant de la pluralité de trajets à l'exception de l'au moins un trajet pour limiter la transmission du signal de référence parmi la pluralité de trajets.

8. Procédé selon la revendication 7, comprenant en outre :
dans le cas où l'erreur relative à la communication du premier réseau serait détectée, identifier une période de génération d'erreurs ; et
dans le cas où une période de génération de l'erreur relative à la communication du premier réseau chevaucherait au moins partiellement une période de transmission du signal de référence du deuxième réseau, déterminer que l'événement relatif au contrôle de transmission du signal de référence est généré.

9. Procédé selon la revendication 1, où la limitation de la transmission du signal de référence comprend :
dans le cas où l'erreur relative à la communication du premier réseau serait générée par un signal de référence du deuxième réseau, identifier un taux de génération d'erreurs de chacun d'une pluralité de motifs de trajet prédéfinis ;
sélectionner un motif de trajet parmi la pluralité de motifs de trajet, sur la base du taux de génération d'erreurs ; et
identifier l'au moins un trajet pour limiter la transmission du signal de référence parmi la pluralité de trajets, sur la base du motif de trajet sélectionné.

10. Procédé selon la revendication 7, où la transmission du signal de référence du deuxième réseau comprend :
dans le cas où un point temporel de transmission correspondant à chacun de l'au moins un trajet restant parmi la pluralité de trajets arriverait, transmettre le signal de référence à travers un trajet correspondant au point temporel de transmission ; et
dans le cas où un point temporel de transmission correspondant à l'au moins un trajet pour limiter la transmission du signal de référence parmi la pluralité de trajets arriverait, transmettre le signal de référence à travers un trajet de référence parmi la pluralité de trajets.
